# EUROPÄISCHE PATENTSCHRIFT

(11) **EP 0 662 200 B1**
(45) Veröffentlichungstag und Bekanntmachung des Hinweises auf die Patenterteilung: **08.05.1996**
(21) Anmeldenummer: 93920742.9
(22) Anmeldetag: 16.09.1993
(51) Int. Cl.: F16B 21/02, F21V 19/00

(54) **VORRICHTUNG ZUM VERBINDEN VON WENIGSTENS ZWEI ELEMENTEN**
DEVICE FOR JOINING AT LEAST TWO ELEMENTS
DISPOSITIF POUR RELIER AU MOINS DEUX ELEMENTS

(30) Priorität: 18.09.1992 DE 4231313; 18.09.1992 DE 4231320; 18.09.1992 DE 4231339; 18.09.1992 DE 4231360
(43) Veröffentlichungstag der Anmeldung: 12.07.1995
(73) Patentinhaber: Kühl, Hans, D-73207 Plochingen (DE)
(72) Erfinder: Kühl, Hans, D-73207 Plochingen (DE)
(74) Vertreter: Müller-Boré & Partner Patentanwälte
(86) Internationale Anmeldenummer: EP9302507
(87) Internationale Veröffentlichungsnummer: WO9407040

(56) Entgegenhaltungen:
- WO-A-92/16763
- DE-A- 2 204 592
- DE-C- 95 101
- DE-U- 8 907 709
- FR-A- 679 382
- FR-A- 1 374 197

## Beschreibung

Die Erfindung betrifft eine Vorrichtung zum Verbinden von wenigstens zwei Elementen.

Bekannte Vorrichtungen solcher Art sind beispielsweise Druckknöpfe, Gewindeschrauben, einrastende oder einschnappende Verbindungen. Die bekannten Vorrichtungen weisen verschiedenste Nachteile auf, so können sie teilweise nur geringe Kräfte in radialer und/oder axialer Richtung aufnehmen oder sie sind in ihrem Aufbau kompliziert und deshalb teuer in der Herstellung.

Eine Vorrichtung zum Verbinden von wenigstens zwei Elementen ist aus der DE-C-95 101 bekannt und betrifft eine Welle-Nabe-Verbindung. Auf der Welle ist eine Vielzahl von in Umfangsrichtung der Welle ansteigenden Keilflächen vorgesehen, die mit entsprechenden Keilflächen der Nabe zusammenwirken. Durch die Vielzahl von Keilflächen soll ein einfaches Verändern der Winkelstellung der Exzenter, Hubdaumen und dergleichen tragenden Naben auf der Welle erreicht werden. Die Keilflächen folgen zur Achse der Welle in exzentrischen Kreisen oder Evolventen. Damit kann zwischen Welle und Nabe nur eine Linienberührung erreicht werden mit der Folge eines extrem hohen Flächendrucks und begrenzter Übertragbarkeit von Axialkräften und Drehmomenten. Mit der bekannten Verbindung können weder ausreichende Kräfte in axialer noch in radialer Richtung übertragen werden. Insbesondere in radialer Richtung können keine auch nur annähernd gleiche Größenordnung aufweisenden Drehmomente bezüglich beider Drehrichtungen übertragen werden.

Der Erfindung liegt die Aufgabe zugrunde, eine Vorrichtung zum Verbinden von wenigstens zwei Elementen vorzuschlagen, die einfach und kostengünstig herstellbar ist, eine einfache Handhabung aufweist und daneben große Kräfte in axialer sowie radialer Richtung aufnehmen kann.

Die Aufgabe wird durch die im Anspruch 1 angegebenen Merkmale gelöst.

Die vorgeschlagene Vorrichtung ist somit gewindelos, jedoch jederzeit lösbar, wenn das angreifende Drehmoment den Reibschluß/Formschluß überwindet. Die in axialer Richtung sowie beidseits in radialer Richtung übertragbaren Kräfte sind neben dem Material und der Oberflächenbeschaffenheit der Keilflächen insbesondere von dem Betrag der Relativverdrehung zwischen Stift und Aufnahme - nach erfolgter Berührung der zusammenwirkenden Keilflächen - abhängig. Zum Verbinden der beiden Gegenstände muß der Stift in die Aufnahme eingesetzt werden, so daß die zusammenwirkenden Keilprofile einander gegenüberliegen und sich berühren. Sofern nach dem Eingreifen des Stiftes in die Aufnahme ein Spalt zwischen gegenüberliegenden Keilprofilen vorhanden ist, bedarf es zunächst einer ersten Relativverdrehung zwischen Stift und Aufnahme, um den Spalt zu schließen, so daß sich die zusammenwirkenden Keilflächen berühren. Danach bedarf es einer weiteren, abhängig von den zu übertragenden Kräften und insoweit bestimmbaren Relativverdrehung zwischen Stift und Aufnahme, um den angestrebten selbsthemmenden Reibschluß zu erreichen. Unabhängig vom Drehsinn können dann in radialer sowie in axialer Richtung spielfrei erhebliche Kräfte übertragen werden, ohne daß sich die Elemente dabei voneinander lösen. Der Pol bzw. Koordinatenursprung der logarithmischen Spirale, die den Verlauf der Keilflächen festlegt, befindet sich dabei in der Achse des Stiftes bzw. der der Aufnahme. Die Vorrichtung kann, bezogen auf Steigung und/oder Spiel, so ausgelegt werden, daß ab bestimmten zwischen Stift und Aufnahme auftretenden Kräften der Stift in der Aufnahme durchrutscht, was als Sicherung gegen Materialschäden dienen kann. Wird die Vorrichtung so ausgebildet, daß ein Durchrutschen nicht möglich ist, endet die Relativbewegung dann, wenn das eingeleitete Drehmoment den Reibschluß zwischen Stift und Aufnahme nicht mehr überwinden kann. Der Verlauf der Keilflächen in Form einer logarithmischen Spirale hat zur Folge, daß sich bei Berührung gegenüberliegender Keilflächen alle Punkte der Keilflächen gleichzeitig berühren und zu tragen beginnen. Im Querschnitt gesehen erfolgt also eine linienförmige Berührung und nicht etwa nur eine punktförmige. Vorzugsweise sind in Umfangsrichtung jeweils drei hintereinander angeordnete Keilprofile am Stift und an der Aufnahme vorgesehen. Bei einer Relativbewegung zwischen Stift und Aufnahme führt dies zu einer Zentrierung zwischen den vorgenannten Elementen. Die Keilprofile eines jeden Elementes können dabei um den Umfang gesehen lückenlos oder voneinander beabstandet angeordnet sein. Zu der aus wenigstens zwei Elementen bestehenden vorgeschlagenen Vorrichtung können noch weitere Gegenstände hinzutreten und zwar so, daß die vorgeschlagene Vorrichtung zwischen diesen Elementen auch ein Verbinden jener Gegenstände bewirkt. Daneben kann eines der beiden Elemente, insbesondere die Aufnahme, jedoch auch in einem dieser Gegenstände integriert sein, so daß die vorgeschlagene Vorrichtung dann aus dem Stift und einem Gegenstand mit Aufnahme besteht. Entsprechendes gilt auch für den Stift, wobei Stift und/oder Aufnahme mit diesen Gegenständen insbesondere auch einstückig verbunden sein können.

Zweckmäßig kann daneben die sektorartige Anordnung der Keilprofile wenigstens über axiale Bereiche des Stiftes und/oder der Aufnahme sein.

Um das Eingreifen des Stiftes in die Aufnahme zu erleichtern, kann nach deren Eingriff ein Spalt zwischen den sich gegenüberliegenden Keilprofilen vorhanden sein. Um diesen Spalt zu schließen und zu einer Anlage der sich gegenüberliegenden Keilflächen zu gelangen, bedarf es lediglich einer Relativbewegung bzw. einer Verdrehung zwischen Stift und Aufnahme. Dabei geht ein Teil der Berührungsflächen der sich gegenüberliegenden Keilflächen verloren, der dann nicht mehr zur Selbsthemmung beitragen kann, aber von geringem Betrag ist.

Die logarithmische Spirale ist zwar die mathematisch exakte Kurvenform, die die angestrebte Berührung gegenüberliegender Keilflächen in sämtlichen Punkten bedingt. In der Praxis kann die Berührung über die gesamte Keilfläche aber auch von Kurven erreicht werden, die der logarithmischen Spirale mehr oder minder angenähert sind. Geringe Abweichungen können nämlich durch die elastische und/oder plastische Verformbarkeit des Materials der Keilflächen ausgeglichen werden. Insoweit kann der Verlauf der logarithmischen Spirale auch durch mehrere Krümmungskreise erzeugt werden, die gegenüber der Achse des Stiftes bzw. der Aufnahme versetzte Kreismittelpunkte aufweisen. Es können also auch Kreisbögen mit Radien, Zentren und Zentriwinkeln gefunden werden, die bei nach ihnen geformten Keilflächen nur unmerkliche Abweichungen vom Verlauf einer logarithmischen Spirale aufweisen.

Die bevorzugte Steigung der Keilflächen zur Erlangung des angestrebten selbsthemmenden Reibschlusses liegt zwischen 1:5 und 1:500, vorzugsweise zwischen 1:20 und 1:100. Bei darüber- bzw. darunterliegenden Steigungen kann der angestrebte selbsthemmende Reibschluß nicht mehr erreicht werden, weil entweder ein zu frühes Durchrutschen des Stiftes in der Aufnahme stattfindet oder die Relativbewegung gar nicht mehr möglich ist.

Der Stift kann einen radialen Vorsprung wie einen Kopf, eine Buchse, eine Nase oder dergleichen Vorsprung, ggf. zusätzlich außen mit einem Gewinde versehen, oder an ihm festgesetzte Teile wie einen Klemmring, eine Klemmscheibe oder dergleichen Teile aufweisen. Daneben kann der Stift auch an Platten, Bauteilen oder dergleichen angeordnet oder mit ihnen einstückig verbunden sein.

Die der Aufnahme zugewandte Unterseite des radialen Vorsprungs des Stiftes sowie der gegenüberliegende Bereich der Aufnahme können einen oder mehrere Keile mit konstanter Steigung aufweisen. Diese Ausführungsform dient der Einleitung von Vorspannkräften in den Stift, d.h. einer Vorspannkraft in Längsrichtung des Stiftes zwischen der Aufnahme und dem Stift. Ist der radiale Vorsprung beispielsweise als kreisrunder Kopf ausgebildet, stellt sich die der Aufnahme zugewandte Unterseite dieses radialen Vorsprunges als Kreisring dar. Die angesprochenen Keile mit konstanter Steigung erstrecken sich dann in Umfangs- bzw. radialer Richtung dieses Kreisringes. Der Bereich der Aufnahme, an welchem die Unterseite des radialen Vorsprunges des Stiftes anliegt, weist ebenfalls Keile mit konstanter Steigung auf, deren Anzahl und Steigung den Keilen der Unterseite des radialen Vorsprunges entspricht. Beim Einfügen des Stiftes in die Aufnahme liegen die Keilflächen der sich gegenüberliegenden Keile der Unterseite einerseits und der Aufnahme andererseits vollflächig aneinander. Bei einer Relativverdrehung des Stiftes in der Aufnahme gleiten die Keilflächen dieser
Keile aufeinander und bedingen eine axiale Relativverschiebung zwischen Stift und Aufnahme, d.h. ein Heraustreten des Stiftes aus der Aufnahme. Gleichzeitig wird aber in der bereits erläuterten Weise der selbsthemmende Reibschluß bewirkt, der die Aufnahme axialer Kräfte zwischen Stift und Aufnahme zu Folge hat. Die Keilprofile von Stift und Aufnahme sowie die Keile der Unterseite des radialen Vorsprungs und die des gegenüberliegenden Bereichs der Aufnahme sind so aufeinander abgestimmt, daß bei einer bestimmten Relativverdrehung zwischen Stift und Schraube einerseits der gewünschte selbsthemmende Reibschluß und andererseits die gewünschte Vorspannkraft zwischen Stift und Aufnahme gegeben sind. Der Vorschlag der Anordnung dieser Keile mit konstanter Steigung ermöglicht demnach das Aufbringen einer Vorspannkraft zwischen Stift und Aufnahme bei der vorgeschlagenen Vorrichtung, obwohl diese kein Gewinde aufweist. Bekanntlich entsteht eine Vorspannkraft bei den üblichen Schraubverbindungen, wenn die Schraube in das entsprechende Gewinde bis zum Anschlag eingeschraubt und dort mit einem bestimmten Drehmoment festgelegt wird. Eine konstante Steigung des bzw. der Keile ist für diese zusätzliche Ausführungsform erforderlich, um ein vollflächiges Anliegen der sich gegenüberliegenden Keilflächen zu erreichen.

Der Stift kann aber auch als Bolzen und die Aufnahme als Mutter ausgebildet sein. Es kann dann von einem gewindelosen Schraubenbolzen und einer gewindelosen Schraubenmutter gesprochen werden, also einer klassischen Schraub- bzw. Schrauben-/Mutterverbindungohne Gewinde. Sämtliche von den Schrauben bzw. Schrauben-/Mutterverbindungen bekannte Eigenschaften werden von dieser bevorzugten Ausführungsform ebenfalls erfüllt. Eine Einleitung der Vorspannkräfte ist durch besondere Kopfformen möglich.

Die vorgeschlagene Vorrichtung kann auch als Sicherungseinrichtung für gewöhnliche, Gewinde aufweisende Schraubverbindungen, also als Schraubsicherung dienen. Sofern diese bekannten Verbindungen Rüttelkräften ausgesetzt sind, besteht die Gefahr des Lösens der Schraubenmutter von der Schraube. Um dies zu verhindern, kann der vorgeschlagene Stift als Ansatzstück, vorzugsweise einstückig, mit einer gewöhnlichen Gewindemutter verbunden sein und dabei eine Durchbohrung mit einem der Gewindemutter entsprechendem Gewinde aufweisen. Auf den Stift kann dann mit einem vorbestimmten Drehmoment die Aufnahme, insbesondere in Form einer Mutter, aufgebracht werden, um die Gewindegänge der Durchbohrung an das Schraubengewinde anzupressen. Die Sicherungseinrichtung kann auch auf andere Weise erfolgen, indem am freien Ende einer üblichen Gewindeschraube oder eines Gewindebolzens in Axialrichtung eine Aufnahme im Sinne der vorgeschlagenen Vorrichtung vorgesehen wird, in die dann ein mit den entsprechenden Keilprofilen versehener Stift eingesetzt wird. Durch Verdrehen des Stiftes weitet sich das freie Ende der Gewindeschraube und preßt das Gewinde in diesem Bereich nach außen in das Gewinde einer dort angeordneten Schraubenmutter zu deren Sicherung. Diese Sicherungseinrichtung stellt dabei prinzipiell die Umkehrung der zuvor geschilderten Sicherungseinrichtung dar.

Die Aufnahme kann auch als elastisch oder elastisch-pla-stisch aufweitbare und/oder geschlitzte Hülse ausgebildet sein. Der Außenumfang der Hülse kann dabei prinzipiell beliebig konfiguriert, insbesondere zylinderförmig ausgebildet sein. Die Hülse wird zu deren Verspannung in ein Bauteil oder dergleichen eingesetzt, wobei zwischen Hülse und Bauteil ein Spalt vorhanden sein kann oder auch eine Passung vorliegt. Sobald der Stift in das Innere der Hülse eingesteckt und nach Berührung der Keilflächen eine weitere Relativbewegung zwischen Stift und Hülse erfolgt, verspannt sich durch die elastische Aufweitbarkeit und/oder die vorgesehenen Schlitze die Hülse, um sich in der Bohrung selbsthemmend zu verspannen. Die Hülse kann mehrfach parallel zu deren Achse geschlitzt sein. Die Schlitze können auch die gesamte Hülsenlänge durchgreifen.

Zur Begrenzung der Relativverschiebung zwischen Stift und Aufnahme können der Stift und die Aufnahme zusammenwirkende Drehanschläge aufweisen. Solche Drehanschläge verhindern eine Zerstörung des Materials und/oder können einer vorbestimmten Lage von Stift zu Aufnahme dienen.

Sofern der Stift als Paßstift und die Aufnahme als Paßbohrung ausgebildet sind, kann der vorgeschlagene Gegenstand auch als Vorrichtung zum Paßzentrieren und/oder Paßverbinden verwendet werden. Die Aufnahme kann dabei als Paßdübelhülse entsprechend der oben erläuterten Hülse ausgebildet sein.

Die vorgeschlagene Vorrichtung kann als Spreizdübel eingesetzt werden, wenn der Stift als Dübelkern und die Aufnahme als Dübelhülse ausgebildet sind. Die Dübelhülse an sich kann grundsätzlich wieder wie die oben beschriebene Hülse ausgebildet sein. Das Paßzentrieren und/oder Paßverbinden erfolgt durch Relativverdrehung von Stift und Aufnahme.

Die vorgeschlagene Vorrichtung kann zum insbesondere lösbaren Befestigen von Griffen an Gegenständen dienen, wenn der Stift an einem entsprechenden Griff und die Aufnahme an einem Griffträger angeordnet sind. Bei den Griffen kann es sich beispielsweise um Türgriffe, Griffe von Kochtöpfen oder auch Griffe von Deckeln für Geschirr oder Fenster handeln sowie alle weiteren Griffe, wie z.B. bei Werkzeug- oder Möbelgriffen.

Der Stift kann aber auch als Sockel einer Glühbirne oder einen ähnlichen lichterzeugenden Teil, der als der eine elektrische Kontakt dient, und die Aufnahme als Fassung zum mechanischen und elektrischen Anschluß der Glühbirne ausgebildet sein.

Die vorgeschlagene Vorrichtung wird anhand der nachfolgenden Figuren noch näher erläutert. Es zeigen:
- Fig. 1: eine perspektivische Darstellung der Aufnahme,
- Fig. 2: eine perspektivische Darstellung des Stiftes,
- Fig. 3: einen Querschnitt durch den Stift und die Aufnahme nach dem Einsetzen des Stiftes in die Aufnahme,
- Fig. 4: einen Querschnitt gemäß Fig. 3 nach einer Relativverschiebung zwischen Stift und Aufnahme,
- Fig. 5 bis 10: verschiedene Ausführungsformen der vorgeschlagenen Vorrichtung in Längsschnitten,
- Fig. 11: eine Ausführungsform der vorgeschlagenen Vorrichtung zur Sicherung einer Gewindemutter im Querschnitt,
- Fig. 12 bis 14: drei unterschiedliche Ausführungsformen der vorgeschlagenen Vorrichtung in Form von Paßverbindungen im Längsschnitt,
- Fig. 15: einen Längsschnitt durch eine Dübel-Paßverbindung,
- Fig. 16: einen Längsschnitt durch eine andere Ausführungsform einer Dübel-Paßverbindung,
- Fig. 17: eine perspektivische Ansicht einer Aufnahme in Form einer Dübelhülse,
- Fig. 18: einen Querschnitt durch eine Dübelhülse und einen Dübelkern nach deren Ineinanderstecken,
- Fig. 19: einen Querschnitt gemäß Fig. 18 nach einer Relativverschiebung zwischen Dübelhülse und Dübelkern,
- Fig. 20: einen Längsschnitt durch eine Ausführungsform einer Dübelhülse,
- Fig. 21: eine Draufsicht auf die Dübelhülse gemäß Fig. 20,
- Fig. 22: einen Querschnitt durch die Dübelhülse gemäß Fig. 20 entlang der Linie A-A,
- Fig. 23: einen Querschnitt durch die Dübelhülse gemäß Fig. 20 entlang der Linie B-B,
- Fig. 24: die Ansicht eines Dübelkerns für die Dübelhülse gemäß Fig. 20,
- Fig. 25: eine Draufsicht auf den Dübelkern gemäß Fig. 24,
- Fig. 26: einen Längsschnitt durch einen montierten Klebe-Spreiz-Anker,
- Fig. 27: eine teilweise geschnittene Darstellung der vorgeschlagenen Vorrichtung als Befestigung eines Griffes an einem Topf,
- Fig. 28: eine teilweise geschnittene Darstellung der vorgeschlagenen Vorrichtung als Befestigung eines Griffes an einem anderen Topf,
- Fig. 29: eine teilweise geschnittene Darstellung der vorgeschlagenen Vorrichtung als Befestigung eines Griffes an einem Deckelgriff,
- Fig. 30: eine teilweise geschnittene Darstellung der vorgeschlagenen Vorrichtung als Befestigung eines Griffes an einem Pfannengriff,
- Fig. 31: eine teilweise geschnittene Draufsicht auf die vorgeschlagene Vorrichtung in Form eines Türschlosses mit zwei Griffen,
- Fig. 32: eine teilweise geschnittene Draufsicht auf die vorgeschlagene Vorrichtung in Form eines anderen Türschlosses mit zwei Griffen,
- Fig. 33: einen Längsschnitt durch eine vorgeschlagene Vorrichtung mit einer Drehsperre,
- Fig. 34: ein Querschnitt durch den Gegenstand der Fig. 33 entlang der Linie VII-VII,
- Fig. 35: einen Querschnitt durch eine andere Ausführungsform einer Drehsperre,
- Fig. 36: eine Draufsicht auf den Gegenstand der Fig. 35,
- Fig. 37: einen Schnitt eines Teiles aus Fig. 36,
- Fig. 38: eine weitere Ausführungsform einer Drehsperre im Querschnitt nach dem Einsetzen des Stiftes in die Aufnahme,
- Fig. 39: einen Querschnitt durch die Vorrichtung gemäß Fig. 38 nach einer Relativverschiebung zwischen Stift und Aufnahme,
- Fig. 40: eine Draufsicht auf den Sockel einer Glühbirne gemäß Fig. 41 und
- Fig. 41: eine Ansicht der vorgeschlagenen Vorrichtung an einer Glühbirne.

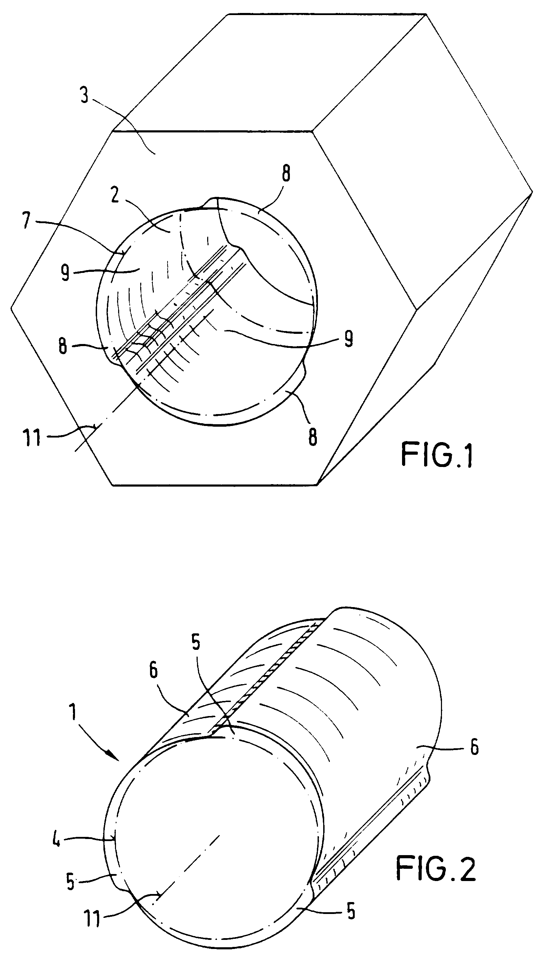

Die Fig. 1 und 2 zeigen in perspektivischer Ansicht die beiden Elemente der vorgeschlagenen Vorrichtung, nämlich einen Stift 1 (Fig. 2) sowie eine Aufnahme 2 (Fig. 1). Die Aufnahme ist in einem Gegenstand 3 angeordnet, der als Sechskantmutter ausgebildet ist. Wenigstens in einem Bereich, nachdem der Stift 1 in die Aufnahme 2 eingeschoben worden ist, weist der Stift 1 bezüglich einer gedachten Zylinderfläche bzw. eines gedachten Zylinderkerns 4 je drei gleiche, über den Zylinderkern 4 vorspringende Nocken 5 auf, deren Keilflächen 6 flach ansteigen und von dem höchsten Punkt aus steil zum tiefsten Punkt des benachbarten Nockens 5 bzw. auf den Zylinderkern 4 abfallen. Die Nocken 5 bilden somit ein konvexes Keilprofil. Die Aufnahme 2 weist bezüglich einer gedachten Zylinderfläche bzw. einer gedachten Zylinderbohrung 7 drei Nuten 8 auf, deren Keilflächen 9 flach abfallen und von ihrem tiefsten Punkt steil zum höchsten Punkt der benachbarten Nut 8 bzw. auf die Zylinderbohrung 7 ansteigen. Die Nut 8 bildet somit ein konvexes Keilprofil, wobei die Anzahl der Nuten 8 denen der Nocken 5 entspricht. Die Keilflächen 6, 9 der Nocken 5 bzw. der Nuten 8 weisen- im Querschnitt gesehen - den Verlauf einer logarithmischen Kurve auf, deren Pol in der Achse des Stiftes 1 bzw. der Aufnahme 2 angeordnet ist. Somit ist die Steigung dieser Keilflächen 6, 9 in allen Punkten entlang ihres Verlaufs gleich und gleichbleibend.

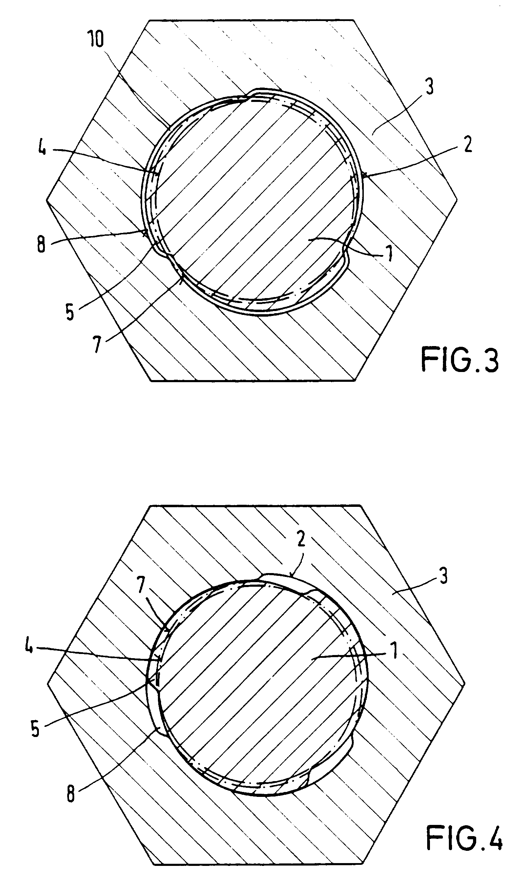

Fig. 3 zeigt im Querschnitt den Stift 1 und die Aufnahme 2 nach einem Einstecken des Stiftes 1 in die Aufnahme 2. Um dieses Ineinanderfügen zu erleichtern, ist zwischen den gegenüberliegenen Keilflächen 6, 9 des Stiftes 1 bzw. der Aufnahme 2 ein Spalt 10 belassen. Der Spalt 10 ist wesentlich geringer als die Differenz zwischen dem Abstand des höchsten Punktes der Keilfläche 6 des Stiftes 1 und dem Abstand des höchsten Punktes der Keilfläche 9 der Aufnahme 2, gemessen an einer gemeinsamen Längsachse 11 des Stiftes 1 und der Aufnahme 2. Die Breite des Spaltes 10 bestimmt neben der Steigung der Keilprofile bzw. Keilflächen 6, 9 sowie deren Anzahl auch das radiale Maß, um das sich die Keilflächen 6, 9 überdecken, was wesentlich die Möglichkeit oder die Verhinderung eines Überspringens von Nuten 8 und Nocken 5 bei einer Relativverschiebung zwischen Stift 1 und Aufnahme 2 zur Erzeugung des selbsthemmenden Reibschlusses bestimmt. Sofern das Überspringen beispielsweise als Sicherung gegen ein Abdrehen des Stiftes 1 gewünscht ist, muß u.a. auch die Elastizität des Materials der Keilprofile mit einbezogen werden. Zum Verbinden von Stift 1 und Aufnahme 2 wird zunächst der Stift 1 in die Aufnahme 2 eingeführt. Danach folgt eine Relativverschiebung zwischen Stift 1 und Aufnahme 2 durch Drehung, um zunächst den Spalt 10 zwischen den sich gegenüberliegenden Keilflächen 6, 9 zu entfernen. In diesem Zustand berühren sich die Keilflächen 6, 9 der gegenüberliegenden Keilprofile, wobei durch die Verwendung von jeweils drei hintereinanderliegenden Keilprofilen eine Zentrierung des Stiftes 1 in der Aufnahme 2 spielfrei erfolgt.

Danach erfolgt eine weitere Relativverschiebung zwischen Stift 1 und Aufnahme 2 durch Drehung in die Befestigungsstellung, wobei eine elastische Verformung der Keilprofile durch Fugendruck erfolgt, was einen selbsthemmenden Reibschluß zwischen Stift 1 und Aufnahme 2 zur Folge hat, wie dies in Fig. 4 gezeigt ist. Fig. 4 könnte auch die Stellung nach Entfernung des Spaltes 10 und vor Erzeugung des selbsthemmenden Reibschlusses darstellen, da die elastische Verformung zeichnerisch nicht dargestellt werden kann. Die nach erfolgter elastischen Verformung zur Verfügung gestellte Verbindung wird auch wieder lösbar, wenn mit entgegengesetztem Drehsinn ein Lösemoment aufgebracht wird, welches den Reibschluß oder einen sich einstellenden Formschluß überwinden kann. Der Winkel, über den das Verdrehen bzw. die Relativverschiebung nach Berührung der Keilflächen 6, 9 erfolgt, hängt vom Spiel, d.h. von der Breite des Spaltes 10 zwischen den gegenüberliegenden Keilflächen 6 und 9, den Werkstoffkennwerten des Materials, der Elastizität des Materials der Keilprofile, vom aufgebrachten Drehmoment, von der Steigung sowie der Anzahl der Keilprofile und ggf. weiteren Parametern ab. Die so zur Verfügung gestellte Verbindung weist meist einen flachen Momentenverlauf über den Drehwinkel auf, so daß das erreichte Lastmoment - solange ausreichender Reibschluß bzw. Formschluß besteht - nicht wesentlich vom vorgesehenen Wert abweicht, wenn der vorgesehene Drehwinkel über- oder unterschritten wird. Diese grundlegende Ausgestaltung betrifft auch alle nachfolgend beschriebenen Ausführungsformen.

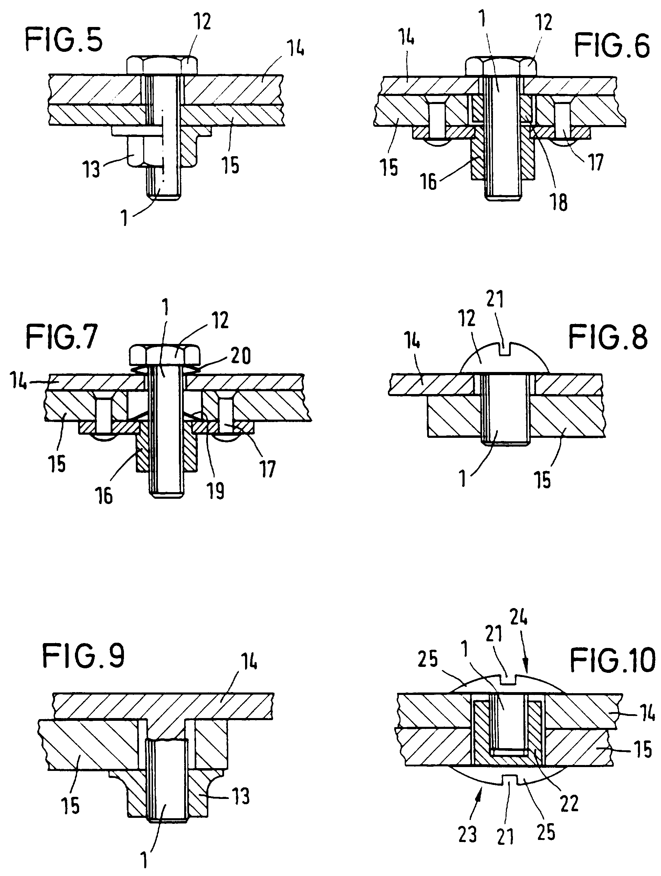

Fig. 5 zeigt eine Ausführungsform der vorgeschlagenen Vorrichtung, wobei der Stift 1 mit einem Kopf 12 versehen ist, an welchem ein Werkzeug zum Verdrehen des Stiftes 1 angesetzt werden kann, bspw. ein Sechskantschlüssel, wobei der Kraftantrieb in seiner Form frei wählbar ist. Auf das freie Ende des Stiftes 1 ist beabstandet vom Kopf 12 die Aufnahme der vorgeschlagenen Vorrichtung in Form einer Keilprofilmutter 13 angeordnet, die an ihrem Umfang ebenfalls zum Ansatz eines Werkzeugs eine entsprechende Konfiguration aufweist. Zwischen dem Kopf 12 und der Mutter 13 sind zwei zu verbindende Teile 14, 15 in Form von beispielsweise Platten angeordnet. Dazu weisen die Teile 14, 15 Bohrungen ohne Keilprofile auf, die fluchtend übereinander angeordnet sind. Der Stift 1 greift durch diese Bohrungen, wobei die Keilprofilmutter 13 wie bei einer Schrauben-/Mutterverbindung auf das freie Ende des Stiftes aufgesteckt wird. Mittels entsprechender Werkzeuge erfolgt eine Relativverdrehung zwischen dem Stift 1 und der Mutter 13, bis deren Keilprofile den gewünschten selbsthemmenden Reibschluß erzeugen. Die Teile 14, 15 können dabei mit oder ohne Spiel zwischen dem Kopf 12 und der Mutter 13 angeordnet sein.

Die Fig. 6 und 7 zeigen Ausführungsformen, bei denen die Aufnahme der vorgeschlagenen Vorrichtung in einem Teilelement 16 angeordnet ist, welches beispielsweise mittels Nieten 17 in einem festzulegenden Teil 15 befestigt ist, wobei Teilelement 16 als Aufnahme 2 selbst als Niet ausgebildet sein kann. Der Stift 1 entspricht im wesentlichen dem in Fig. 5 beschriebenen. Fig. 6 zeigt, wie durch einen innen mit Keilprofilen versehenen Sicherungsring 18 der Stift 1 unverlierbar an dem Teil 14 gesichert werden kann. Die gleiche Wirkung kann mit einem Federring 19 gemäß Fig. 7 erreicht werden. Fig. 7 zeigt auch, wie mittels zwischen dem Kopf 12 des Stiftes 1 und dem Teil 14 eingelegter Tellerfedern 20 die Teile 14 und 15 unter Federspannung gegeneinander gedrückt gehalten werden können.

In Fig. 8 ist eine Ausführungsform gezeigt, bei welcher die Aufnahme der vorgeschlagenen Vorrichtung in dem den Kopf 12 des Stiftes 1 abgekehrten, zu verbindenden Teil 15 angeordnet ist, so daß ein weiteres, die Aufnahme 2 aufweisendes Teil entfallen kann. Der Stift 1 durchgreift die glatte Bohrung des Teils 14 sowie die die Aufnahme enthaltende Bohrung des Teils 15, wobei der Stift 1 zum Beispiel über einen Schlitz 21, also eine Angriffsstelle für ein Drehwerkzeug, ähnlich wie eine Gewindeschraube, bis zum selbsthemmenden Reibschluß verdreht wird.

So wie die Keilprofile der Aufnahme gemäß Fig. 8 unmittelbar an einem der zu verbindenden Teile 14, 15 angeordnet sein können, ist dies auch für das Keilprofil des Stiftes 1 möglich. Gemäß der Ausführungsform in Fig. 9 ist der Stift 1 samt seinen Keilprofilen an dem, beispielsweise aus Kunststoff hergestellten Teil 14 angeformt. Die übrigen Teile entsprechen dabei den zuvor beschriebenen Teilen der Fig. 5 bis 8.

Fig. 10 zeigt eine Ausführungsform der vorgeschlagenen Vorrichtung, bei der das Keilprofil der Aufnahme in einem hülsenförmigen Ansatz 22 eines Teilelements 23 angeordnet ist, welches zu dem den Stift 1 aufweisenden Teilelement 24 komplementär ausgebildet ist. Die flach gewölbten Stirnflächen der Teilelemente 23, 24 weisen zum Beispiel Schlitze 21 auf, an denen wiederum Werkzeuge zum gegenseitigen Verdrehen der beiden Teilelemente 23, 24 angreifen können. Zum Verbinden der Teile 14 und 15 werden die beiden Teilelemente 23, 24 in die Bohrungen der Teile 14, 15 sowie der Stift 1 und die Aufnahme 2 dabei ineinander gesteckt. Anschließend werden die beiden Teilelemente 23, 24 bis zum Reibschluß gegeneinander verdreht. Insoweit können der Stift 1 und/oder die Aufnahme 2 (Fig. 1 bis 4) auch, insbesondere einstückig, mit zu verbindenden Teilen 14, 15 verbunden sein oder zwischen Stift 1 und/oder Aufnahme 2 beliebige Teile angeordnet bzw. verbunden werden.

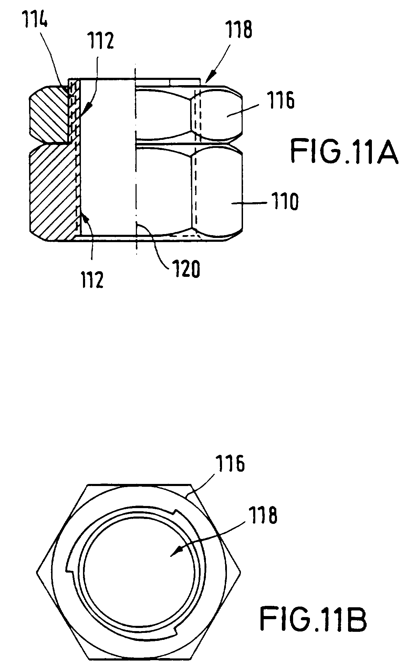

Fig. 11 zeigt eine bevorzugte Verwendung der vorgeschlagenen Vorrichtung als Sicherung gegen ein Loslösen üblicher Gewindemuttern bei auftretenden Schwingungen bzw. Rüttelkräften. Eine Gewindemutter 110 mit einem Gewinde 112 weist dazu ein angeformtes Ansatzstück 114 auf. Das Ansatzstück 114 entspricht dem Stift der vorgeschlagenen Vorrichtung und weist eine Durchgangsbohrung mit einem der Gewindemutter 110 entsprechenden Gewinde 112 auf, so daß das Gewinde 112 durchgängig ausgebildet ist. Am Außenumfang des Ansatzstückes 114 sind die beschriebenen Keilprofile angeformt. Vorzugsweise ist die Gewindemutter 110 mit dem Ansatzstück 114 einstückig verbunden. In üblicher Weise wird die so ausgebildete Gewindemutter 110 auf das nicht dargestellte Ende eines Gewindebolzens bzw. dessen Gewinde aufgeschraubt. Die Sicherung erfolgt über einen Sicherungsring 116, der eine Durchbohrung 118 aufweist. Die Durchbohrung 118 stellt die Aufnahme der vorgeschlagenen Vorrichtung dar, die dazu am Innenumfang Keilflächen aufweist, welche mit den Keilflächen des Außenumfangs des Ansatzstückes 114 zusammenwirken. Auf die bereits oben geschilderte Art und Weise wird das als Stift dienende Ansatzstück 114 in die als Aufnahme dienende Durchbohrung 118 eingeschoben. Anschließend wird der Sicherungsring 116 relativ zum Ansatzstück 114 verdreht bis die sich gegenüberliegenden Keilflächen aneinanderliegen. Durch weiteres Relativverdrehen des Sicherungsrings 116 in bezug auf das Ansatzstück 114 wird der angestrebte selbsthemmende Reibschluß erreicht. Dabei werden die Gewindegänge des Gewindes 112 des Ansatzstückes 114 in die Gewindegänge des nicht dargestellten Gewindes des Gewindebolzens eingedrückt, so daß sämtliche in diesem Bereich befindlichen Gewindegänge zu tragen anfangen. Ein Losrütteln der Gewindemutter 110 aufgrund großer Schwingungen bzw. Rüttelkräfte kann durch die vorgeschlagene Konstruktion sicher verhindert werden. Daneben kann das Material des Ansatzstückes 114 sich von dem der Gewindemutter 110 unterscheiden, um eine noch bessere Anlage der einzelnen Gewindegänge in diesem Bereich zu erreichen. Aus den gleichen Gründen kann das Ansatzstück 114 auch Längsschlitze in Richtung der Längsachse 120 aufweisen. Der Außenumfang des Sicherungsrings 116 kann zum Angriff eines Werkzeugs beispielsweise als Sechskant ausgebildet sein.

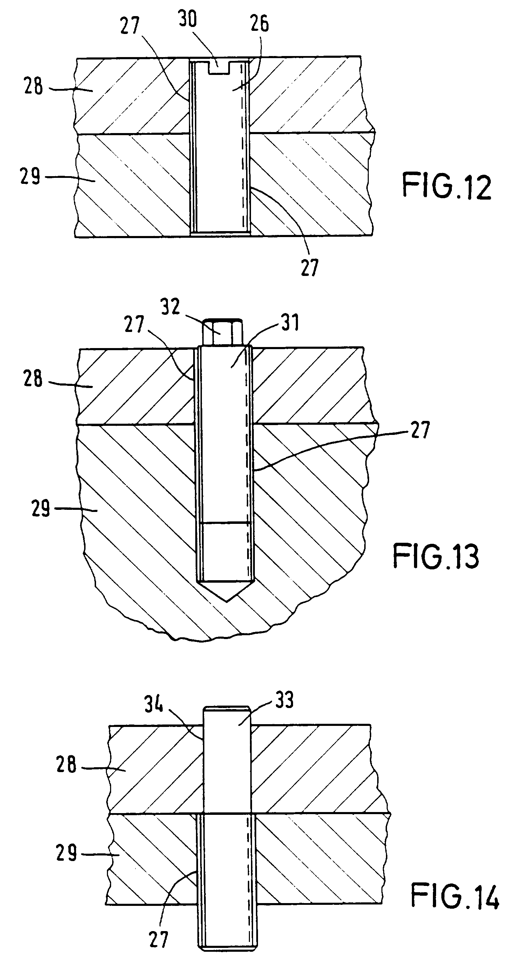

Die Fig. 12 bis 16 zeigen die Verwendung der vorgeschlagenen Vorrichtung zum Paßzentrieren und Paßverbinden. Durch Paßverbindungen in Form von Paßstiften, die in Paßbohrungen eingebracht werden, werden Teile genauestens zueinander ausgerichtet, zentriert und/oder unverrückbar befestigt. Dabei gibt es Paßverbindungen, die nur zentrieren, aber nicht befestigen. Sie gewährleisten, daß die durch die Paßverbindung verbundenen Teile ohne weiteres getrennt werden können, beim Zusammenfügen aber genauestens wieder in die vorherige Paßstellung finden. Bei sowohl zentrierenden als auch befestigenden Paßverbindungen werden durch den Paßstift die zentrierten Teile auch kraftschlüssig zusammengehalten. Paßverbinden schließt insoweit also Paßzentrieren ein. Paßverbindungen, die sowohl zentrieren als auch befestigen, sind darauf angelegt, daß die paßverbundenen Teile zusammengefügt bleiben und nur ausnahmsweise getrennt werden. Die nachfolgend beschriebenen Paßstifte entsprechen grundsätzlich dem Stift 2 gemäß Fig. 2.

Fig. 12 zeigt die Anwendung der vorgeschlagenen Vorrichtung zum Paßzentrieren und Paßverbinden zweier Teile 28 und 29. Der Aufnahme der vorgeschlagenen Vorrichtung entspricht hierbei die Paßbohrung 27. Der Stift der vorgeschlagenen Vorrichtung entspricht hierbei dem Paßstift 26. Die Keilprofile beider Paßbohrungen 27 in den als Platten dargestellten Teilen 28, 29 sind gleich, d.h. sie stimmen hinsichtlich Anzahl, Steigung usw. ihrer Keilprofile überein. Die Keilprofile können durch Einbringen einer zunächst zylindrischen Bohrung und anschließendes Räumen der Keilprofile mittels einer entsprechenden Keilprofil-Räumnadel hergestellt werden. Alternativ können die Paßbohrungen 27 mit den Keilprofilen auch bei der Bearbeitung der Teile 28, 29 auf NC-Maschinen paßgenau gefertigt, insbesondere gefräst werden. Auch Fertigungsverfahren wie Schleifen, Drücken oder Fließpressen sind einsetzbar. Der Paßstift 26 weist über seine Länge durchgehend Keilprofile auf. Er wird zweckmäßigerweise durch Profilziehen des Keilprofils auf Stangenmaterial und Ablängen oder preßtechnisch hergestellt. Zum Paßzentrieren der Teile 28, 29 wird der Paßstift 26 in die Paßbohrungen 27 der annähernd richtig positionierten Teile 28, 29 gesteckt und mittels eines Werkzeuges am Schlitz 30 gedreht. Durch das damit bewirkte Aneinandergleiten der Keilprofile des Paßstiftes 26 und der Paßbohrungen 27 der Teile 28, 29 werden diese in die genaue Paßstellung gezogen, also paßzentriert. Beim weiteren Verdrehen des Paßstiftes 26 erfolgt das Paßverbinden, wobei der Paßstift 26 mit jedem der Teile 28, 29 in selbsthemmenden Reibschluß kommt und damit sich selber in den Teilen 28, 29 und damit indirekt auch die Teile 28, 29 aneinander befestigt. Das Verdrehen des Paßstiftes 26 in den Paßbohrungen 27 kann durch verschiedene Werkzeuge, insbesondere Schraubenzieher, Sechskantschlüssel oder ähnlichem Werkzeug erfolgen.

Fig. 13 zeigt eine Paßverbindung, bei welcher der Paßstift 31 (Stift im Sinne der vorgeschlagenen Vorrichtung) nicht von hinten zugänglich ist, so daß der Paßstift 31 von dort nicht entfernt werden kann. Die Paßbohrung 27 ist im Teil 29 als Sackloch ausgeführt. Der selbsthemmende Reibschluß des in gleicher Weise wie vorstehend beschriebenen paßzentrierenden und paßverbindenden Paßstiftes 31 in den Paßbohrungen 27 der beiden Teile 28, 29 kann durch Zurückdrehen an einem Sechskant 32 entgegen der Befestigungsrichtung aufgehoben und der Paßstift 31 entnommen werden.

Fig. 14 zeigt einen nur zum Paßzentrieren bestimmten Paßstift 33 (Stift im Sinne der vorgeschlagenen Vorrichtung), der nur auf seinem zur Aufnahme im Teil 29 bestimmten Längsabschnitt Keilprofile aufweist, an seinem zur Aufnahme im Teil 28 bestimmten Längsabschnitt jedoch zylindrisch oder schwach kegelig mit gegen das Stiftende abnehmendem Durchmesser ausgebildet ist. Entsprechend weist nur das Teil 29 Keilprofile auf, während das Teil 28 eine allerdings paßgenaue zylindrische bzw. kegelige Bohrung 34 aufweist. Der Paßstift 33 wird in der geschilderten Weise mittels der Keilprofile an ihm und im Teil 29 durch Reibschluß in diesem Teil 29 befestigt. Er ragt hierzu aus dem Teil 29 heraus und kann in diesem Bereich mittels eines Werkzeuges, welches dann ebenfalls mit entsprechenden Keilprofilen versehen ist, in Reibschluß mit der Paßbohrung 27 im Teil 29 gebracht werden. Das Teil 28 kann dann in genau zentrierter Position mit seiner Paßbohrung 34 auf den über das Teil 29 überstehenden zylindrischen oder kegeligen Zapfen des Paßstiftes 33 aufgesteckt werden.

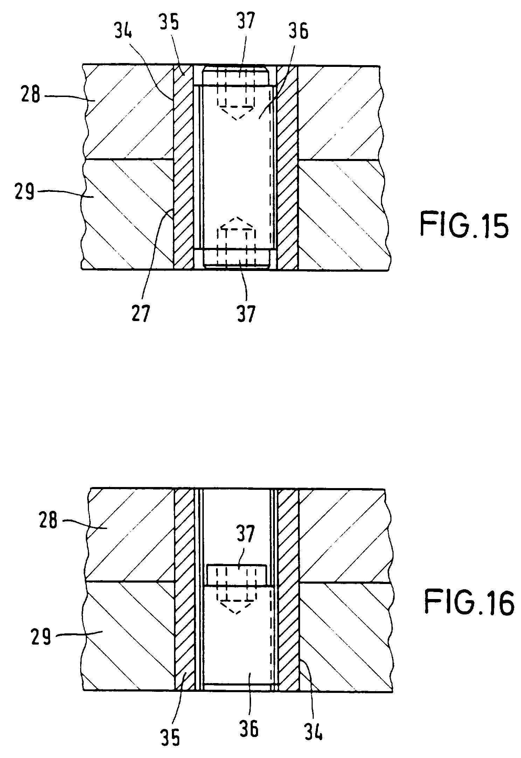

Wenn die Teile 28, 29 nicht für das Anbringen eines oder mehrerer Keilprofile geeignet sind, kann eine Dübel-Paßverbindung wie in Fig. 15 gezeigt eingesetzt werden. Diese Dübel-Paßverbindung weist eine Hülse bzw. Paß-Dübelhülse 35 auf, die außen zylindrisch ist und in zylindrische Bohrungen 34 der Teile 28, 29 eingesetzt wird. Die Paß-Dübelhülse 35 weist auf ihrer Innenfläche die Keilprofile auf und stellt insoweit die Aufnahme im Sinne der vorgeschlagenen Vorrichtung dar. Der dazugehörige Dübel-Paßstift 36 (Stift im Sinne der vorgeschlagenen Vorrichtung) weist auf seiner Mantelfläche die entsprechenden Keilprofile auf. Zum Verdrehen zwischen Dübel-Paßstift 36 und Paß-Dübelhülse 35 weist der Dübel-Paßstift 36 an wenigstens einem freien Ende Angriffsflächen für Werkzeuge, hier einen Innensechskant 37, auf, um den selbsthemmenden Reibschluß zwischen Dübel-Paßstift 36 und Paß-Dübelhülse 35 herzustellen. Dabei wird die Paß-Dübelhülse 35 elastisch oder elastisch-plastisch so weit aufgeweitet, daß sie sich mit ihrer Außenfläche im Preßsitz an die eng tolerierten Bohrungen 34 in den Teilen 28, 29 anlegt und damit Reibschluß auch zwischen der Paß-Dübelhülse 36 und den Bohrungen 34 bewirkt. Der Außendurchmesser der Paß-Dübelhülse 35 und der Innendurchmesser der Bohrung 34 können beispielsweise durch Schleifen so eng toleriert werden, daß das Aufweiten der Paß-Dübelhülse 35 allein durch elastische Verformung ausreicht, den angestrebten Preßsitz zwischen Paß-Dübelhülse 35 und Bohrungen 34 herbeizuführen. Bei größeren Toleranzen kann die Paß-Dübelhülse 35 über einen Teil ihrer Länge mit achsparallelen Schlitzen versehen sein, die ein stärkeres Aufweiten zum Überbrücken größerer Toleranzen erleichtert. Die in Fig. 15 gezeigte Vorrichtung ist zum Paßverbinden geeignet.

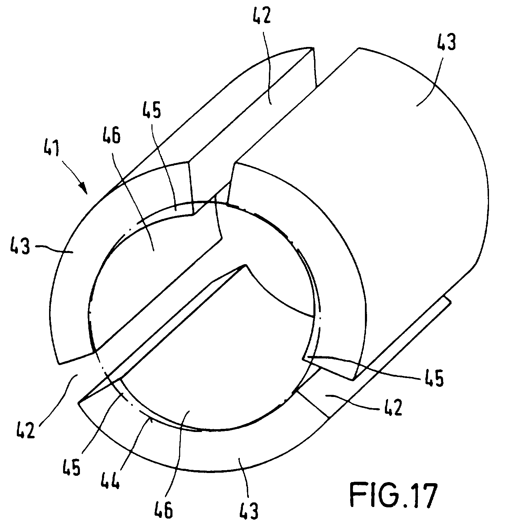

Fig. 16 zeigt eine Ausführungsform zum Paßzentrieren, bei welcher sich der Dübel-Paßstift 36 (Stift im Sinne der vorgeschlagenen Vorrichtung) nur über denjenigen Längsbereich der Paß-Dübelhülse 35 (Aufnahme im Sinne der vorgeschlagenen Vorrichtung) erstreckt, in dem diese aufgeweitet werden soll. In dem darüberliegenden Bereich bleibt der Außendurchmesser unverändert. Dadurch wird in diesem Bereich kein Reibschluß oder Preßsitz hergestellt und das Teil 28 kann abgezogen und aufgesteckt werden. Alternativ können die Keilprofile in der Paß-Dübelhülse 35 und/oder am Dübel-Paßstift 36 in nicht dargestellter Weise auf denjenigen Längsbereich der Paß-Dübelhülse 35 und des Dübel-Paßstifts 36 beschränkt werden, mit dem die Paß-Dübelhülse 35 in dasjenige Teil 28, 29 eingreift, in welchem der Dübel-Paßstift 36 befestigt werden soll. Die Paß-Dübelhülse 35 kann auch parallel zu ihrer Achse ein- oder mehrfach geschlitzt sein und alle Merkmale der nachfolgend beschriebenen Dübelhülsen gemäß der Fig. 17 bis 26 aufweisen.

Die Fig. 17 bis 26 zeigen die Verwendung der vorgeschlagenen Vorrichtung als Spreizdübel. Spreizdübel werden durch Aufweiten der den Mantel eines Dübels bildenden Dübelhülse im Dübelloch verankert. Es ist bekannt, dieses Aufweiten durch Verlagern des Dübelkerns in der Dübelhülse in Achsrichtung des Dübels zu bewirken. Dabei wird eine Schraube in die Dübelhülse gedreht, deren nach hinten zunehmender Durchmesser die Dübelhülse, deren Bohrung sich häufig auch gegen die Dübelspitze hin verengt, aufweitet. In anderen Fällen wird ein Spreizkeil mittels eines Gewindestiftes in die Dübelhülse gezogen und weitet die Dübelhülse auf.

In den Fig. 17 bis 19 ist das Prinzip des Zusammenwirkens eines Stiftes im Sinne der vorgeschlagenen Vorrichtung in Form eines Dübelkerns 40 und einer Aufnahme im Sinne der vorgeschlagenen Vorrichtung in Form einer Dübelhülse 41 insbesondere zum Aufweiten der Dübelhülse 41 zum Anliegen an die Wandung eines Dübelloches 49 und zum Herstellen des selbsthemmenden Reibschlusses zwischen Dübelkern 40 und Dübelhülse 41 schematisch anhand von funktionsrelevanten Längsabschnitten des Dübelkerns 40 und der Dübelhülse 41 erläutert. Zum leichteren Verständnis wird hierbei von einer durch Schlitze 42 in Zungen 43 gespaltenen Dübelhülse 41 ausgegangen, wobei die vorgeschlagene Vorrichtung auch ohne oder mit sich nicht über die gesamte Länge der Dübelhülse 41 erstreckenden Schlitzen 42 funktionsfähig ist, wenn die Dübelhülse 41 elastisch aufweitbar ausgebildet ist. Der Dübelkern 40 ist prinzipiell wie der in Fig. 2 gezeigte Stift 1 ausgebildet.

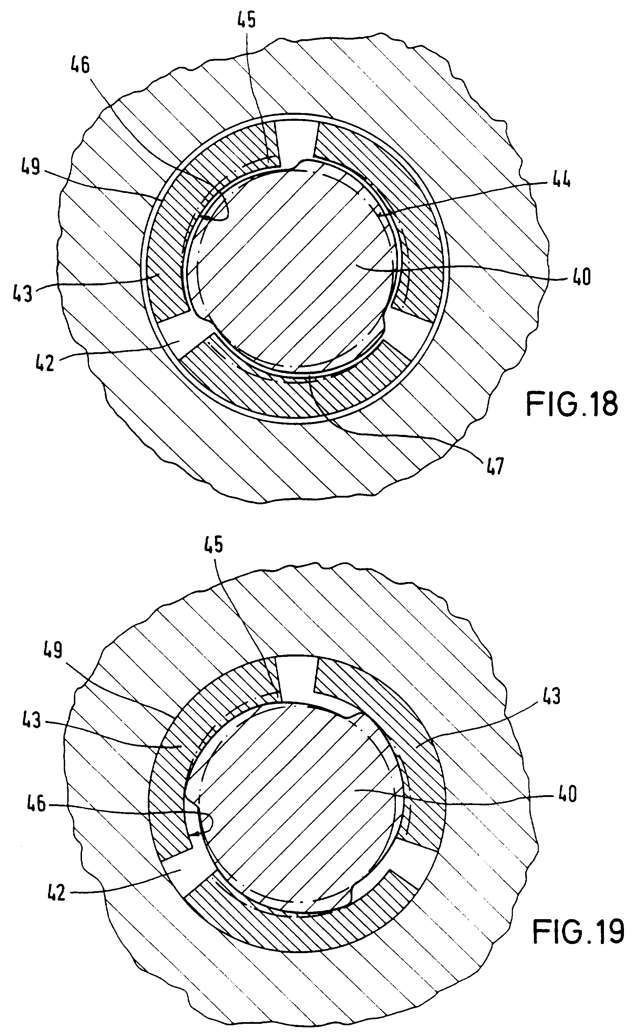

Fig. 17 zeigt die Dübelhülse 41, an deren Innenfläche - wie auch in Fig. 1 beschrieben - über einer gedachten Zylinderbohrung 44 Nocken 45 als Keilprofile ausgebildet sind, deren Keilflächen 46 mit denen der Keilprofile des Dübelkerns 40 (Fig. 18) zusammenwirken. Vorteilhafterweise sind hier drei Nocken 45 bzw. drei Keilflächen 46 ausgebildet. Höchster bzw. tiefster Punkt einer solchen Keilfläche 46 ist jeweils der Rand eines Schlitzes 42 der Dübelhülse 41. Vorzugsweise ist der gedachte Zylinderkern des Dübelkerns 40 etwas kleiner als die Zylinderbohrung 44 der Dübelhülse 41. Infolge dieses Durchmesserunterschiedes ergibt sich zwischen den Keilprofilen des Dübelkerns 40 und den Keilprofilen der Innenfläche der Dübelhülse 41 ein Spalt 47. Die Breite dieses Spaltes 47 ist gering und so bemessen, daß es nicht zu einem Durchrutschen des Dübelkerns 40 in der Dübelhülse 41 kommt, das Ineinanderstecken des Dübelkerns 40 in die Dübelhülse 41 jedoch auf leichte Weise möglich ist. Um die Dübelhülse 41 in einem Dübelloch 49 (Fig. 18) zu verankern und den Dübelkern 40 mit der Dübelhülse 41 zu verbinden, werden diese - wie beschrieben - in zwei Schritten miteinander in Wirkverbindung gebracht. Zunächst wird der Dübelkern 40 in die Dübelhülse 41 eingesteckt, so daß sich die in Fig. 18 dargezeigte Stellung ergibt. Danach wird der Dübelkern 40 in der im Dübelloch 49 drehfest gehaltenen Dübelhülse 41 im Uhrzeigersinn nach rechts gedreht. Dadurch vermindert sich der Abstand zwischen den Keilprofilen des Dübelkerns 40 und denen der Dübelhülse 41, bis alle Keilprofile jeweils paarweise aneinanderliegen und der Spalt 47 nicht mehr vorhanden ist. Bei einem weiteren Verdrehen des Dübelkerns 40 werden die Zungen 43 der Dübelhülse 41 durch die Keilprofile der Innenfläche der Dübelhülse 41 zunehmend nach außen gedrückt, bis ihre Außenflächen an der Wand des Dübellochs 49 anliegen. Bei einem Fortsetzen der Verdrehung des Dübelkerns 40 werden die Keilprofile des Dübelkerns 40 und der Innenfläche der Dübelhülse 41, die nun nicht mehr nach außen ausweichen können, elastisch verformt, wobei sich in dieser in Fig. 19 dargestellten Befestigungsstellung der Dübelkern 40 in der Innenfläche der Dübelhülse 41 selbsthemmend verklemmt, so daß eine feste, aber auch wieder lösbare Verbindung zwischen Dübelloch 49, Dübelhülse 41 und Dübelkern 40 hergestellt wird. Der Winkel, über den das Verdrehen erfolgt, hängt u.a. von der Größe des Spaltes 47, den verwendeten Materialien und der Ausbildung der Keilprofile sowie dem Abstand zwischen der Außenfläche der Zungen 43 von der Wand des Dübelloches 49 ab.

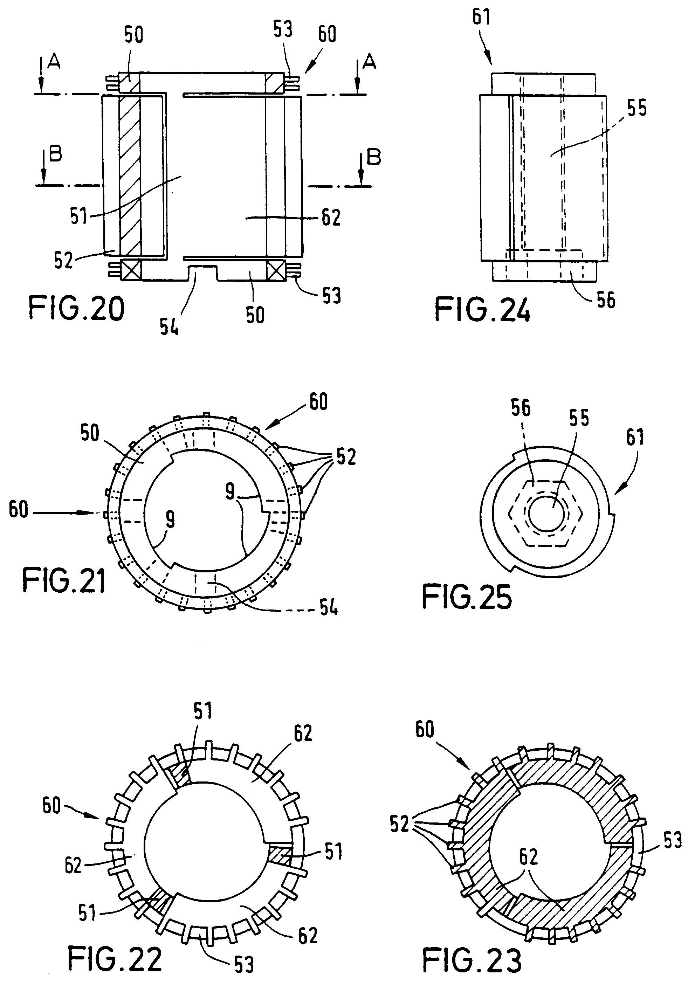

In den Fig. 20 bis 25 ist ein nach obigem Prinzip ausgebildeter Spreizdübel dargestellt. Die Dübelhülse 60 (Aufnahme im Sinne der vorgeschlagenen Vorrichtung) weist an beiden Enden einen Ringbund 50 auf, der im dargestellten Beispiel durch drei Stege 51 miteinander verbunden ist. An diesen Stegen 51 sind die Zungen 62 angeformt, deren Innenflächen die Keilprofile aufweisen. Achsparallele Rippen 52 auf den Außenflächen der Zungen 62 und Umfangsrippen 53 auf den Ringbünden 50 sichern die Dübelhülse 60 im Dübelloch gegen Verdrehen und Verschieben. Ein Sichern der Dübelhülse 60 gegen Verdrehen kann auch mittels eines in radialen Nuten 54 in den Ringbünden 50 eingreifendes Werkzeug erfolgen. Der Dübelkern 61 (Stift im Sinne der vorgeschlagenen Vorrichtung) weist an seiner Umfangsfläche die mit den Keilprofilen der Dübelhülse 60 zusammenwirkenden Keilprofile auf. Der Dübelkern 61 ist von einer Gewindebohrung 55 durchsetzt und weist an seinem einen Ende einen Innensechskant 56 auf. Zum Befestigen des Dübels in einem Dübelloch wird die Dübelhülse 60 in das Dübelloch und der Dübelkern 61 in die Dübelhülse 60 gesteckt. Anschließend wird der Dübelkern 61 mit einem Imbusschlüssel verdreht. Dabei wirken die Keilprofile des Dübelkerns 61 mit denen der Dübelhülse 60 zusammen und drükken die Zungen 62 mit zunehmendem Verdrehen des Dübelkerns 61 nach außen. Dadurch verankert sich die Dübelhülse 60 im Dübelloch. Anschließend wird durch den selbsthemmenden Reibschluß zwischen den Keilprofilen der Dübelkern 61 in der Dübelhülse 60 verankert. In die Gewindebohrung 55 des Dübelkerns 61 kann dann ein Funktionselement, beispielsweise ein Haken mit Gewindestift, eingedreht werden. Soll der Dübel wieder entfernt werden, kann durch Zurückdrehen des Dübelkerns 61 der Reibschluß zwischen Dübelkern 61 und Dübelhülse 60 und infolgedessen auch der Reibschluß zwischen den Zungen 62 der Dübelhülse 60 und der Wand des Dübellochs aufgehoben werden. Insofern können der Dübelkern 61 und die Dübelhülse 60 aus dem Dübelloch genommen und anderweitig erneut verwendet werden.

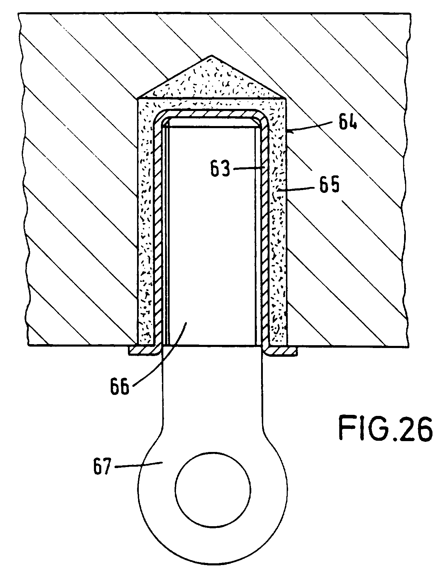

Fig. 26 zeigt eine Ausführungsform eines Klebe-Spreiz-Ankers, bei welcher die Dübelhülse 63 (Aufnahme im Sinne der vorgeschlagenen Vorrichtung) als topfförmiges Teil ohne Schlitz ausgebildet ist, welches aus Stahl im Tiefziehverfahren oder aus Kunststoff im Spritzverfahren hergestellt werden kann. Die Dübelhülse 63 weist auf ihrer Innenfläche die Keilprofile auf und dient als Kern beim Ausgießen eines Dübellochs 64 mit beispielsweise einem schnell abbindenden Füllmittel 65. Wenn das Füllmittel 65 abgebunden ist, wird der Dübelkern 66 (Stift im Sinne der vorgeschlagenen Vorrichtung) in die im Füllmittel 65 eingebettete und gehaltene Dübelhülse 63 gesteckt und wie vorstehend mehrfach bescnrieben verdreht. Dadurch treten die Keilprofile des Dübelkerns 66 und die der Dübelhülse 63 miteinander in Wirkverbindung und spreizen die insoweit elastische Dübelhülse 63 auf, so daß sie fest im Füllmittel 65 und damit im Dübelloch 64 verankert wird. Der Dübelkern 66 ist dabei einstückig mit einem Funktionselement, hier einer Öse 67 verbunden.

Dübelkern und Dübelhülse können in einem ersten Axialbereich Keilprofile zum Aufweiten der Dübelhülse mit einer großen Steigung und in mindestens einem weiteren Axialbereich Keilprofile zum selbsthemmenden Reibschluß von Dübelkern und Dübelhülse mit der bereits zu Stift und Aufnahme eingangs beschriebenen Steigung aufweisen.

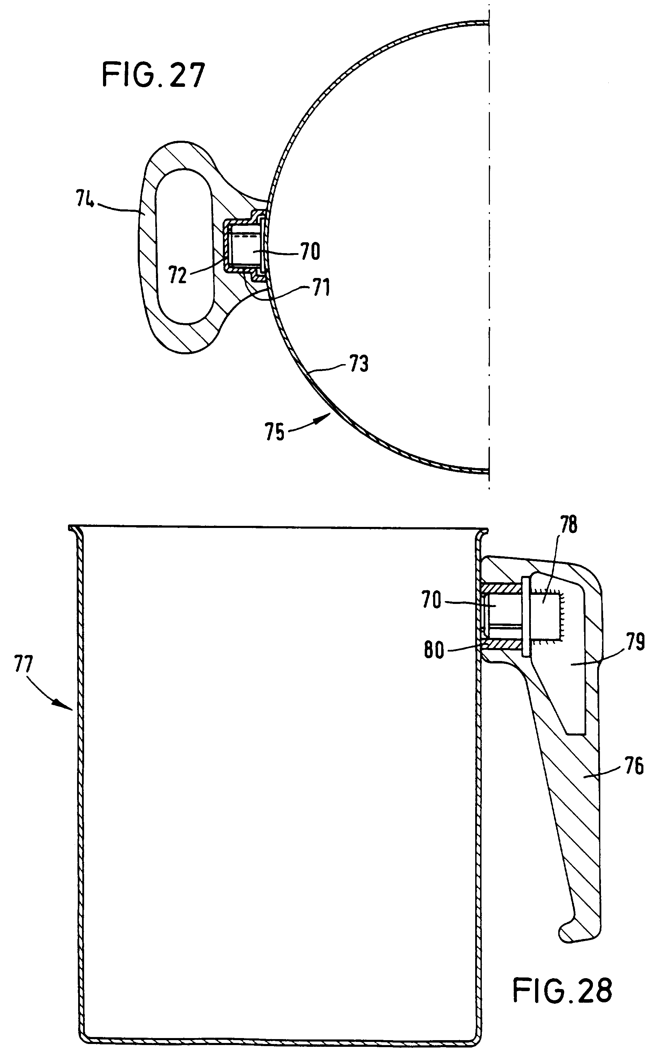

Die Fig. 27 bis 39 zeigen die Anwendung der vorgeschlagenen Vorrichtung zum lösbaren Befestigen eines Griffes an einem Griffträger. Es kann sich dabei um Kochgeschirre, Fenster, Türen, Schaltaggregate etc. handeln. Bislang wurden entsprechende Griffe beispielsweise über Schraubverbindungen oder Schnappfederanordnungen befestigt. Die auftretenden Nachteile sind die hohen Herstellungskosten infolge der Mehrteiligkeit der bislang bekannten Anordnungen und das Lockern der entsprechenden Befestigung im Laufe der Zeit. Aufgrund der vorgeschlagenen Anwendung ist es einerseits möglich, einen Griff an einem Griffträger mit festem Sitz anzubringen und ihn auch wieder zu lösen, weshalb ein einfacher Austausch oder ein Entfernen zu Reinigungszwecken, beispielsweise eines Kochtopfs in einer Spülmaschine möglich ist.

In Fig. 27 ist ein Beispiel für eine praktische Anwendung zum Befestigen eines Griffes an einem Kochtopf 75 dargestellt. Die Keilprofile einer Aufnahme 71 sind hier an einem Einsatzteil 72 ausgeformt, welches in den als Spritzgußteil ausgeführten Griff 74 eingespritzt ist. Ein Stift 70 mit den Keilprofilen, die mit den Keilprofilen der Aufnahme 71 zusammenwirken, ist an der Wandung 73 des Kochtopfes 75 angebracht, insbesondere angeschweißt. Zum Befestigen des Griffes 74 wird dieser mit der Aufnahme 71 seines Einsatzteiles 72 auf den Stift 70 aufgesteckt und so weit verdreht, bis die richtige, waagerechte Stellung des Griffes 74 und der gewünschte selbsthemmende Reibschluß erreicht sind. Stift 70 und Aufnahme 71 müssen dabei so angeordnet sein, daß mit dem an sich geringen Drehwinkel sowohl die richtige Stellung des Griffes 74 als auch der selbsthemmende Reibschluß erreichbar sind. Zum Lösen des Griffes 74 wird er in Gegenrichtung gedreht, wodurch sich der Reibschluß löst und der Griff 74 abgezogen werden kann.

In Fig. 28 ist die Befestigung eines Faustgriffes 76 an einem Milchtopf 77 dargestellt. Bei diesem Ausführungsbeispiel ist der Stift 70 an einem Einsatzstück 78 angeordnet, welches in den aus zwei spiegelbildlichen Hälften bestehenden Griff 76 eingelegt ist. Eine in der Fügefuge des Griffes 76 eingebettete Fahne 79 am Einsatzstück 78 hält das Einsatzstück 78 drehfest im Griff 76. Die Aufnahme im Sinne der vorgeschlagenen Vorrichtung ist in Form einer Hülse 80 ausgebildet, die am Topf 77 befestigt ist. Zum Befestigen des Griffes 76 am Topf 77 wird der Stift 70 am Griff 76 in die Hülse 80 eingesteckt und in die senkrechte Stellung gedreht. Dadurch wird der Reibschluß hergestellt und der Griff 76 sitzt fest am Topf 77.

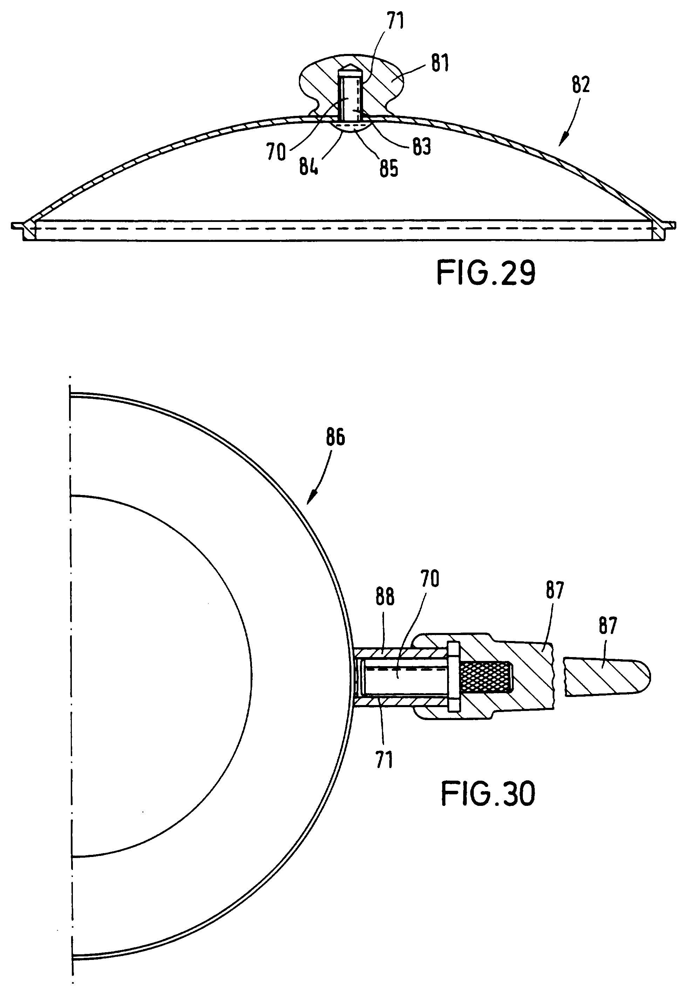

Fig. 29 zeigt die Befestigung eines Griffknopfes 81 an einem Topfdeckel 82. Der Stift 70 ist an einem Bolzen 83 mit Rundkopf 84 angeformt, der von unten nach oben durch eine Bohrung des Deckels 82 gesteckt ist oder am Deckel 82, beispielsweise durch Schweißen, befestigt sein kann. Die auftretenden Kräfte ermöglichen es, die Aufnahme 71 direkt in dem beispielsweise als Kunststoff-Spritzgußteil hergestellten Griffknopf 81 auszuformen, so daß auf ein eingespritztes Einsatzteil verzichtet werden kann. Zum Befestigen des Griffknopfes 81 wird er mit seiner Aufnahme 71 auf den Stift 70 gesteckt und verdreht, bis ein ausreichender selbsthemmender Reibschluß erzielt wird. Mittels eines in einen Schlitz 85 im Rundkopf 84 des Bolzens 83 eingreifendes Werkzeug kann dabei ein Mitdrehen des Bolzens 83 verhindert werden. Da der Griffknopf 81 in der Regel ein in bezug auf die Deckelachse rotationssymmetrisches Teil ist, braucht hier auf die Winkelstellung keine Rücksicht genommen zu werden.

In Fig. 30 ist die Befestigung eines Pfannengriffs 87 an einer Pfanne 86 dargestellt. Diesem Ausführungsbeispiel ist die Aufnahme 71 in einem Stielstummel 88 der Pfanne 86 ausgeformt, während der Stift 70 am Pfannengriff 87 sitzt. Er ist in den als Spritzgußteil ausgebildeten Pfannengriff 87 eingespritzt. Zum Befestigen des Pfannengriffs 87 wird der Stift 70 in die Aufnahme 71 des Stielstummels 88 gesteckt und bis zum selbsthemmenden Reibschluß verdreht. Wenn der Griff 87 zur Achse des Stiftes 70 rotationssymmetrisch ausgebildet ist, braucht die Winkelstellung nicht berücksichtigt zu werden. Auch hier kann die Anordnung von Stift 70 und die Anordnung 71 vertauscht werden, so daß also der Stift 70 auch am Stielstummel 88 und die Aufnahme 71 am Pfannengriff 87 angeordnet sein kann.

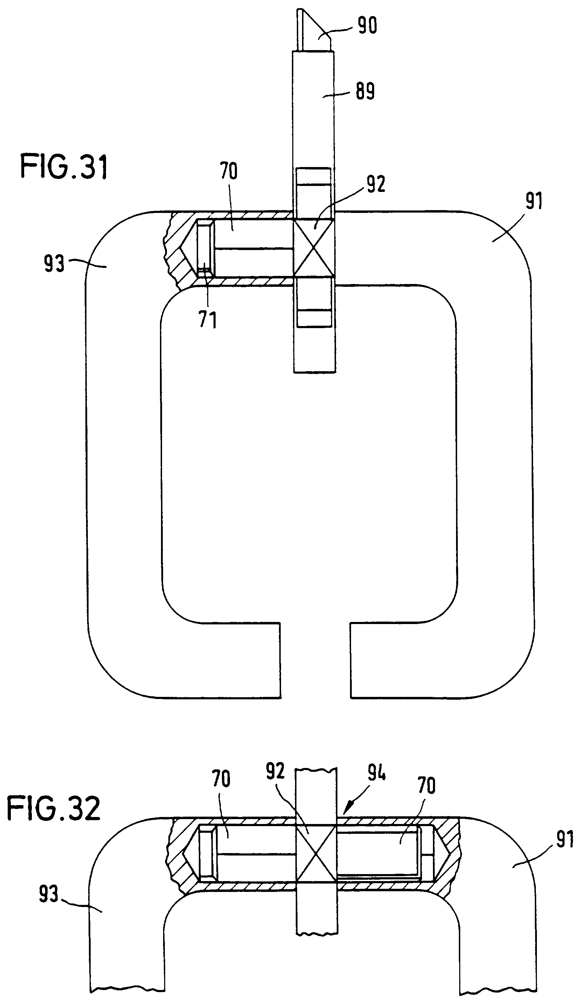

Die Fig. 31 und 32 zeigen eine Befestigung von Türgriffen unter Verwendung der vorgeschlagenen Vorrichtung. Von der entsprechenden Tür ist nur das Schloß 89 mit dem Sperriegel 90 dargestellt. Am Griff 91 ist der Stift 70 mit den Keilprofilen angeformt, wobei zwischen Griff 91 und Stift 70 ein Vierkant 92 eingefügt ist. Im Griff 93 sind die Keilprofile der Aufnahme 71 ausgeformt. Zum Befestigen der Griffe 91 und 93 wird der Stift 70 des Griffes 91 durch das Schloß 89 gesteckt, wobei ein Vierkant 92 in den Innenvierkant des Schloßgetriebes eingreift. Dann wird der Griff 93 auf den Stift 70 aufgesteckt und die beiden Griffe 91, 93 werden so weit gegeneinander verdreht, bis sie parallel stehen. Bei entsprechender Festigkeit des Schloßgetriebes kann die Drehung des Griffes 91 auch über einen Vierkant blockiert werden, so daß nur der Griff 93 gedreht zu werden braucht. Dies ist bei Türen mit Griff nur auf einer Seite oder bei Griffen beispielsweise an elektrischen oder fluidischen Drehschaltelementen von Bedeutung. Wenn gemäß Fig. 32 an einem den Vierkant 92 tragenden Zwischenstück 94 zwei sich nach entgegengesetzten Seiten erstreckende Stifte 70 mit entgegengesetzter Steigungsrichtung der Keilprofile angeordnet werden, können einheitlich Türgriffe 93 nur mit Aufnahmen 71 verwendet werden. Abgesehen von einer Mindesteinstecktiefe des Stiftes 70 in die Aufnahme 71, die erforderlich ist, um die notwendige Festigkeit des selbsthemmenden Reibschlusses zu erzielen, kann dieser selbsthemmende Reibschluß bei beliebigen Einstecktiefen erreicht werden. Dies hat bei Türgriffen den besonderen Vorteil, daß eine Griffbefestigung der vorgeschlagenen Art ohne weiteres bei sehr unterschiedlichen Türdicken eingesetzt werden kann. Die Griffbefestigung wird einfach durch entsprechend tiefes Einstecken bis zur spielfreien Anlage des Griffes am Türschild an die Türdicke angepaßt. Da bei Türgriffen ebenso wie bei Topfgriffen die richtige Winkelstellung nach Erreichen des Selbsthemmenden Reibschlusses wichtig ist, wird auch bei Türgriffen, wie bei allen anderen hier beschriebenen Vorrichtungen bzw. speziellen Anwendungen, mit Vorteil eine im folgenden beschriebene Drehwinkelbegrenzung angewendet.

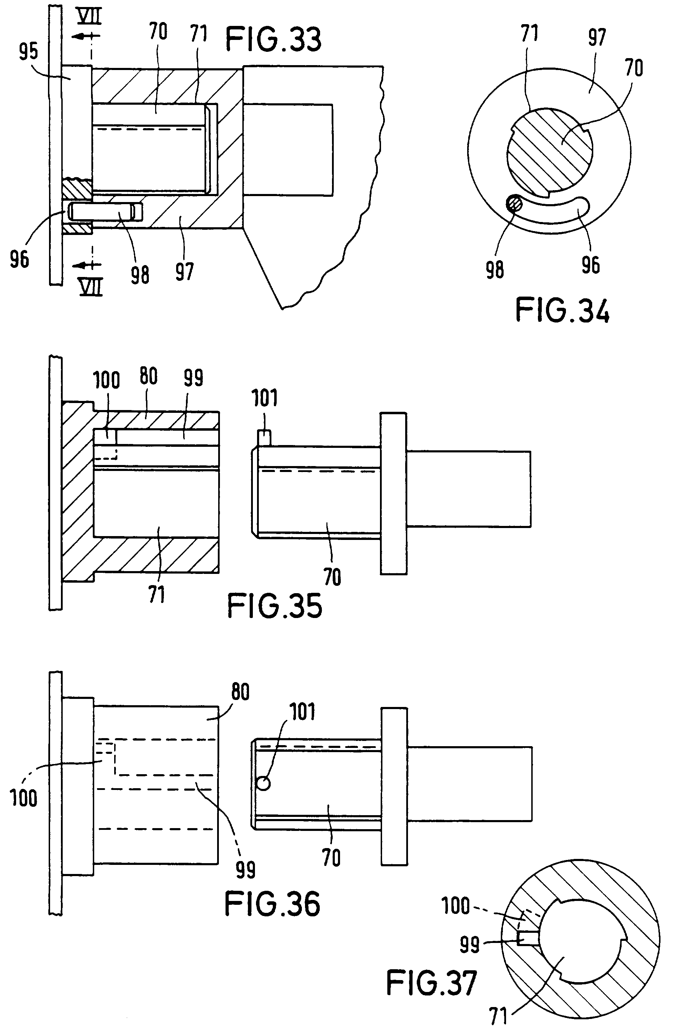

In der Ausführungsform gemäß der Fig. 33 und 34 ist in einem an der Wandung eines Topfes sitzenden Sockel 95 des Stiftes 70 ein gekrümmtes Langloch 96 angeordnet, in welches ein Bolzen 98 eingreifen kann, der an einer beispielsweise mit einem Topfgriff verbundenen, die Aufnahme 71 aufweisenden Büchse 97 angebracht ist. Das Langloch 96 und der Bolzen 98 sind in einer solchen gegenseitigen Position angebracht, daß die vorgesehene Stellung des Griffes dann erreicht wird, wenn der Bolzen 98, wie in Fig. 34 gezeigt, am Ende des Langlochs 96 anlegt. Der Griff bzw. die Aufnahme 71 läßt sich in einer Stellung auf den Stift 70 aufstecken, in der der Bolzen 98 in der Nähe des in Fig. 34 rechten Ende des Langlochs 96 steht. Beim Verdrehen des Griffes im Uhrzeigersinn zum Herstellen des selbsthemmenden Reibschlusses wandert der Bolzen 98 im Langloch 96 nach links, wobei, wenn er am Ende des Langlochs 96 anliegt, sowohl ein ausreichender selbsthemmender Reibschluß als auch die vorgesehene Stellung des Griffes erreicht wird. Insoweit sind also der Stift 70 einerseits und seine Aufnahme 71 andererseits mit einem Paar von zusammenwirkenden Drehanschlägen versehen, die aus einer Nase bzw. einem Bolzen 98 an dem Stift 70 oder der Aufnahme 71 und einer Rille am Stift 70 bzw. der Aufnahme 71 bestehen oder aus einer achsparallelen Rille an dem Stift 70 bzw. der Aufnahme 71, wobei die Länge dieser Rille der vorgesehenen Einstecktiefe entspricht und die Rille an ihrem inneren Ende in eine Umfangsrille mündet, wie dies bei der nachfolgenden Ausführungsform beschrieben wird.

In der Ausführungsform gemäß der Fig. 35 bis 37 ist in die Aufnahme 71 eine achsparallele Nut 99 eingearbeitet, an die sich am Grund der Aufnahme 71, ausgebildet an der Hülse 80, eine kurze Umfangsnut 100 anschließt. Der Stift 70 trägt in einem vorderen Bereich einen auf die Nuten 39, 40 abgestimmten Bolzen 101. Ein beispielsweise mit dem Stift 70 verbundener Griff kann erst dann zum Herstellen des selbsthemmenden Reibschlusses verdreht werden, wenn der Bolzen 101 über die ganze Länge der Nuten 99 bewegt und in die Ebene der Nut 100 gelangt ist. Damit ist sichergestellt, daß der selbsthemmende Reibschluß nur auf der ganzen vorgesehenen Länge des Stiftes 70 und der Aufnahme 71 hergestellt werden kann. Darüber hinaus kann durch die Länge der Nut 100 der Effekt des Langlochs 96 gemäß der Fig. 33 und 34 erzielt werden, d.h. wenn der Stift 101 am Ende der Nut 100 anliegt, ist sowohl ausreichender selbsthemmender Reibschluß gegeben als auch die vorgesehene Stellung des Griffes erreicht. Für die in den Fig. 33 bis 37 dargestellten Sicherungen sind auch andere, den gleichen Zweck erfüllende Lösungen möglich. So kann beispielsweise der Bolzen 101 am Bund eines Stiftes 70 und das Langloch 96 in der Büchse 97 der Aufnahme 71 angeordnet sein oder es kann auch anstelle des Bolzens 101 eine in eine Nut eingreifende Nocke vorgesehen sein. Die Nuten 99, 100 können auch am Stift 1, der Bolzen 101 oder eine ihm entsprechende Nase an der Büchse 97 der Aufnahme 2 angebracht sein oder Nuten 99, 100 und Bolzen 101 können auch mehrfach vorgesehen sein.

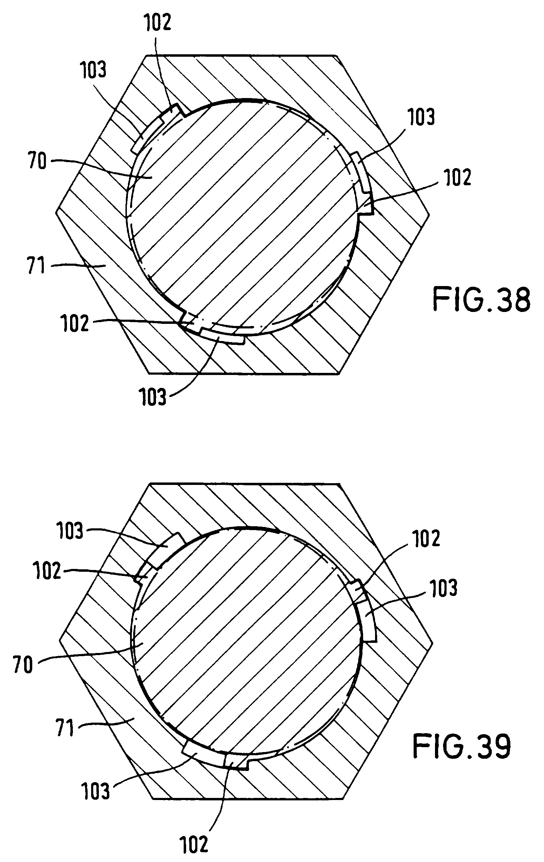

Eine grundlegende Möglichkeit der Begrenzung des Drehwinkels zwischen dem Stift 70 und der Aufnahme 71 zeigen die Fig. 38 und 39. Insbesondere diese Ausführungsformen einer Drehwinkelbegrenzung, wie auch die in Fig. 33 bis 37 beschrieben, können bei sämtlichen vorstehenden Vorrichtungen und Anwendungsbeispielen eingesetzt werden. In diesem Fall ist der Stift 70 mit mindestens einer, im dargestellten Ausführungsbeispiel mit drei achsparallelen Anschlägen 102 versehen, die in entsprechenden Nuten 103, die in der Aufnahme 71 ausgebildet sind, eingreifen. Dabei ist die Breite der Nuten 103 im Querschnitt so gewählt, daß die Anschläge 102 sich in den Nuten 103 um eine, dem maximal zulässigen Drehwinkel entsprechende Distanz in Umfangsrichtung bewegen können. Die Fig. 38 zeigt dabei die Stellung nach einem Einstecken des Stiftes 70 in die Aufnahme 71. Die Anschläge 102 liegen dabei an einer Flanke der Nuten 103 an. Fig. 39 zeigt dann die Lage nach dem Verdrehen, in welcher die Anschläge 102 nun an den anderen Flanken der Nuten 103 anliegen und ein weiteres Verdrehen verhindern. In dieser Stellung ist neben der angestrebten vorbestimmten Lage des Stiftes 70 zur Aufnahme 71 auch der angestrebte selbsthemmende Reibschluß erreicht. Die Länge der Anschläge 102 und somit auch der Nuten 103 in Achsrichtung des Stiftes 70 bzw. der Aufnahme 71 kann den entsprechenden Anforderungen angepaßt werden. Sie sind so ausgelegt, daß weiterhin ein leichtes Einfügen des Stiftes 70 in die Aufnahme 71 gewährleistet ist.

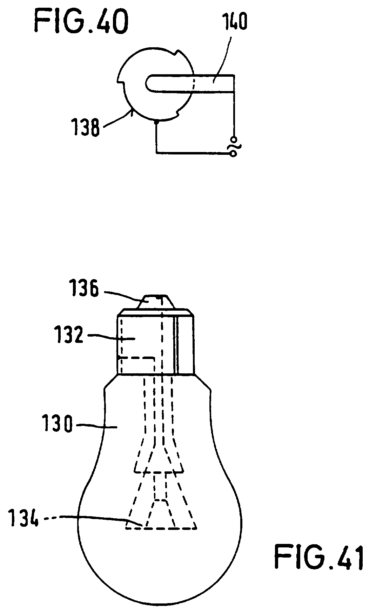

Schließlich zeigen die Fig. 40 und 41 einen weiteren Anwendungsfall der vorgeschlagenen Vorrichtung als Sockelfassung einer Glühbirne bzw. elektrischen Lampe 130. Der Sockel 132 der Lampe 130 entspricht dem mit Keilprofilen versehenen Stift der vorgeschlagenen Vorrichtung, der mit dem einen Ende eines Glühfadens 134 verbunden ist. Das andere Ende des Glühfadens 134 liegt wie üblich an einem Kontaktstift 136. Die Keilprofile der entsprechenden Aufnahme der vorgeschlagenen Vorrichtung sind in einer als Blechhülse ausgebildeten Fassung 138 ausgebildet, die mit dem einen Pol ei-ner Stromquelle verbunden ist. Der andere Pol einer Stromquelle liegt an der üblichen Kontaktzunge 140.

Zum Einsetzen der Lampe 130 wird sie wie üblich bis zur Anlage des Kontaktstiftes 136 an der Kontaktzunge 140 mit ihrem Sockel 132 in die Fassung 138 eingesteckt und durch Drehen in den angestrebten selbsthemmenden Reibschluß mit der Fassung 138 gebracht. Durch diesen selbsthemmenden Reibschluß wird nicht nur die sichere Halterung der Lampe 130, sondern auch zuverlässiger elektrischer Kontakt zwischen dem Sockel 132 und der Fassung 138 gewährleistet.

### Bezugszeichenliste

1 Stift
2 Aufnahme
3 Gegenstand
4 Zylinderkern
5 Nocken
6 Keilfläche
7 Zylinderbohrung
8 Nut
9 Keilfläche
10 Spalt
11 Längsachse
12 Kopf
13 Keilprofilmutter
14 Teil
15 Teil
16 Teilelement
17 Niet
18 Sicherungsring
19 Federring
20 Tellerfeder
21 Schlitz
22 hülsenförmiger Ansatz
23 Teilelement
24 Teilelement
25 Teilelement
26 Paßstift
27 Paßbohrung
28 Teil
29 Teil
30 Schlitz
31 Paßstift
32 Sechskant
33 Paßstift
34 Bohrung
35 Paß-Dübelhülse
36 Dübel-Paßstift
37 Innensechskant
40 Dübelkern
41 Dübelhülse
42 Schlitz
43 Zunge
44 Zylinderbohrung
45 Nocken
46 Keilfläche
47 Spalt
48 Längsachse
49 Dübelloch
50 Ringbund
51 Steg
52 Rippe
53 Umfangs-Rippe
54 Nut
55 Gewindebohrung
56 Innensechskant
57 erster Axialbereich
58 zweiter Axialbereich
59 Bund
60 Dübelhülse
61 Dübelkern
62 Zunge
63 Dübelhülse
64 Dübelloch
65 Füllmittel
66 Dübelkern
67 Öse
70 Stift
71 Aufnahme
72 Einsatzteil
73 Wandung
74 Griff
75 Kochtopf
76 Faustgriff
77 Milchtopf
78 Einsatzstück
79 Fahne
80 Hülse
81 Griffknopf
82 Topfdeckel
83 Bolzen
84 Rundkopf
85 Schlitz
86 Pfanne
87 Pfannengriff
88 Stielstummel
89 Schloß
90 Sperriegel
91 Griff
92 Vierkant
93 Griff
94 Zwischenstück
95 Sockel
96 Langloch
97 Büchse
98 Bolzen
99 Nut
100 Umfangsnut
101 Bolzen
102 Anschlag
103 Nut
110 Gewindemutter
112 Gewinde
114 Ansatzstück
116 Sicherungsring
118 Durchbohrung
120 Längsachse
130 Lampe
132 Sockel
134 Glühfaden
136 Kontaktstift
138 Fassung
140 Kontaktzunge

## Patentansprüche

1. Vorrichtung bestehend aus wenigstens zwei Elementen, bei welcher das eine Element einen Stift (1) und das andere Element eine Aufnahme (2) für den Stift (1) aufweist, wenigstens ein Bereich des Stiftes (1) in dessen Umfangsrichtung mindestens einen, eine gedachte Zylinderfläche (4) radial übersteigenden Nocken (5) und die Aufnahme (2) in deren Umfangsrichtung eine den Nocken (5) entsprechende Anzahl von, eine gedachte Zylinderfläche (7) radial vertiefenden Nuten (8) aufweist und die Nocken (5) und Nuten (8) in Form von Keilprofilen ausgebildet sind, dadurch gekennzeichnet, daß die Keiflächen (6,9) der Nocken (5) und der Nuten (8) im wesentlichen dem Verlauf einer logarithmischen Spirale bezüglich der Achse von Stift (1) bzw. Aufnahme (2) folgen, wobei die Steigung zusammenwirkender Keilflächen (6, 9) einen gleichen Betrag aufweist und so flach ausgebildet ist, daß aufgrund einer bestimmbaren Relativbewegung zwischen Stift (1) und Aufnahme (2) nach erfolgter Berührung der zusammenwirkenden Keilflächen (6, 9) durch Aufbau eines Fugendrucks, somit spielfrei, ein selbsthemmender Reibschluß, unabhängig vom Drehsinn und der Belastungsrichtung, in radialer sowie axialer Richtung zwischen Stift (1) und Aufnahme (2) gegeben ist.

2. Vorrichtung nach Anspruch 1, bei welcher jeweils drei in Umfangsrichtung hintereinanderliegende Keilprofile am Stift (1) und an der Aufnahme (2) angeordnet sind.

3. Vorrichtung nach Anspruch 1, bei welcher die Keilprofile sektorartig wenigstens über axiale Bereiche des Stiftes (1) und/oder der Aufnahme (2) angeordnet sind.

4. Vorrichtung nach Anspruch 1, bei welcher nach Eingriff des Stiftes (1) in die Aufnahme (2) ein Spalt (10) zwischen gegenüberliegenden Keilprofilen von Stift (1) und Aufnahme (2) vorhanden ist.

5. Vorrichtung nach Anspruch 1, bei welcher der Verlauf der logarithmischen Spirale durch mehrere Krümmungskreise erzeugt wird, die gegenüber der Achse des Stiftes (1) bzw. der der Aufnahme (2) versetzte Kreismittelpunkte aufweisen.

6. Vorrichtung nach Anspruch 1, bei welcher die Steigung der Keilflächen (6, 9) zwischen 1:5 und 1:500, vorzugsweise zwischen 1:20 und 1:100, liegt.

7. Vorrichtung nach Anspruch 1, bei welcher der Stift (1) einen radialen Vorsprung wie einen Kopf (12), eine Buchse, eine Nase oder dergleichen Vorsprung oder an ihm festgesetzte Teile wie einen Klemmring, eine Klemmscheibe oder dergleichen Teile aufweist.

8. Vorrichtung nach Anspruch 7, bei welcher die der Aufnahme (2) zugewandte Unterseite des radialen Vorsprungs des Stiftes (1) sowie der gegenüberliegende Bereich der Aufnahme einen oder mehrere Keile mit konstanter Steigung aufweisen.

9. Vorrichtung nach einem der Ansprüche 1 bis 8, bei welcher der Stift (1) als Bolzen und die Aufnahme (2) als Mutter ausgebildet sind.

10. Vorrichtung nach einem der Ansprüche 1 bis 6, bei welcher der Stift (1) als Ansatzstück (114) mit einer Gewindemutter (110) verbunden ist und eine Durchbohrung (118) mit einem der Gewindemutter (110) entsprechenden Gewinde (112) aufweist.

11. Vorrichtung nach Anspruch 1, bei welcher die Aufnahme (2) als elastisch oder elastisch-plastisch aufweitbare und/oder geschlitzte Hülse (41) ausgebildet ist.

12. Vorrichtung nach Anspruch 1, bei welcher der Stift (1) und die Aufnahme (2) zusammenwirkende Drehanschläge (102) aufweisen.

13. Vorrichtung nach einem der Ansprüche 1 bis 6, 11 oder 12, bei welcher der Stift (1) als Paßstift (26) und die Aufnahme (2) als Paßbohrung (27) ausgebildet sind.

14. Vorrichtung nach einem der Ansprüche 1 bis 6, 11 oder 12, bei welcher der Stift (1) als Dübelkern (40) und die Aufnahme (2) als Dübelhülse (41) ausgebildet sind.

15. Vorrichtung nach einem der Ansprüche 1 bis 6, 11 oder 12, bei welcher der Stift (1) an einem Griff (74) und die Aufnahme (2) an einem Griffträger oder umgekehrt angeordnet sind.

16. Vorrichtung nach einem der Ansprüche 1 bis 6 oder 12, bei welcher der Stift (1) als Sockel (132) einer Glühbirne (130) oder dergleichen Licht erzeugendem Teil, der als der eine elektrische Kontakt dient, und die Aufnahme (2) als Fassung (138) zum mechanischen und elektrischen Anschluß der Glühbirne (130) ausgebildet sind.

## Claims

1. Device comprising at least two elements, in which one element has a stud (1) and the other element has a receptacle (2) for the stud (1), at least one region of the stud (1) has, in its circumferential direction, at least one cam (5) which rises radially above an imaginary cylinder surface (4), and the receptacle (2) has, in its circumferential direction, a number, corresponding to the cams (5), of grooves (8) which radially deepen an imaginary cylinder surface (7), and the cams (5) and grooves (8) are designed in the form of wedge profiles, characterized in that the wedge surfaces (6, 9) of the cams (5) and of the grooves (8) essentially follow the course of a logarithmic spiral in relation to the axis of the stud (1) and receptacle (2), the pitch of interacting wedge surfaces (6, 9) having an equal value and being designed to be so flat that, owing to a determinable relative motion between the stud (1) and the receptacle (2), after contact of the interacting wedge surfaces (6, 9) has taken place by building up a joint pressure, thus without play, a self-inhibiting frictional engagement is provided in the radial and in the axial direction between the stud (1) and the receptacle (2), irrespective of the direction of rotation and the direction of loading.

2. Device according to Claim 1, in which in each case three wedge profiles located one after the other in the circumferential direction are arranged on the stud (1) and on the receptacle (2).

3. Device according to Claim 1, in which the wedge profiles are arranged in the manner of sectors at least over axial regions of the stud (1) and/or of the receptacle (2).

4. Device according to Claim 1, in which, after engagement of the stud (1) in the receptacle (2), there is a gap (10) between opposite wedge profiles of the stud (1) and receptacle (2).

5. Device according to Claim 1, in which the course of the logarithmic spiral is produced by a plurality of curvature circles which have offset centre points in relation to the axis of the stud (1) and that of the receptacle (2).

6. Device according to Claim 1, in which the pitch of the wedge surfaces (6, 9) lies between 1:5 and 1:500, preferably between 1:20 and 1:100.

7. Device according to Claim 1, in which the stud (1) has a radial projection like a head (12), a bush, a lug or similar projection or parts attached thereto like a clamping ring, a clamping disc or similar parts.

8. Device according to Claim 7, in which the underside, facing the receptacle (2), of the radial projection of the stud (1) and the opposite region of the receptacle have one or more wedges of constant pitch.

9. Device according to one of Claims 1 to 8, in which the stud (1) is designed as a bolt and the receptacle (2) is designed as a nut.

10. Device according to one of Claims 1 to 6, in which the stud (1) is connected as an extension piece (114) to a threaded nut (110) and has a through-bore (118) with a thread (112) corresponding to the threaded nut (110).

11. Device according to Claim 1, in which the receptacle (2) is designed as an elastically or elastically-plastically expandable and/or slotted sleeve (41).

12. Device according to Claim 1, in which the stud (1) and the receptacle (2) have interacting rotary stops (102).

13. Device according to one of Claims 1 to 6, 11 or 12, in which the stud (1) is designed as a dowel pin (26) and the receptacle (2) is designed as a dowel bore (27).

14. Device according to one of Claims 1 to 6, 11 or 12, in which the stud (1) is designed as a plug core (40) and the receptacle (2) is designed as a plug sleeve (41).

15. Device according to one of Claims 1 to 6, 11 or 12, in which the stud (1) is arranged on a handle (74) and the receptacle (2) is arranged on a handle bearer or vice versa.

16. Device according to one of Claims 1 to 6 or 12, in which the stud (1) is designed as a base (132) of a light-bulb (130) or similar light-producing part which serves as one electrical contact, and the receptacle (2) is designed as a fixture (138) for the mechanical and electrical connection of the light-bulb (130).

## Revendications

1. Dispositif comprenant au moins deux éléments, dans lequel un élément présente une goupille (1) et l'autre élément un logement (2) pour la goupille (1), au moins une zone de la goupille (1) présente dans son sens périphérique au moins une came (5) dépassant radialement une surface cylindrique (4) imaginaire et le logement (2) présente dans son sens périphérique un nombre correspondant aux cames (5) de rainures (8) approfondissant radialement une surface cylindrique (7) imaginaire et dans lequel les cames (5) et rainures (8) se présentent sous la forme de profils en clavette, caractérisé en ce que les surfaces de clavetage (6,9) des cames (5) et des rainures (8) suivent principalement le tracé d'une spirale logarithmique par rapport à l'axe de la goupille (1) ou du logement (2), la pente des surfaces de clavetage (6,9) coopérantes présentant une même valeur et étant réalisée si plate que, suite à un mouvement relatif déterminable entre la goupille (1) et le logement (2) après le contact des surfaces de clavetage (6,9) coopérantes, en raison de l'établissement d'une pression de joints, on a donc un frottement autobloquant sans jeu, indépendamment du sens de rotation et du sens de charge, dans le sens radial et le sens axial entre la goupille (1) et le logement (2).

2. Dispositif selon la revendication 1, dans lequel respectivement trois profils en clavette successifs dans le sens périphérique sont disposés sur la goupille (1) et sur le logement (2).

3. Dispositif selon la revendication 1, dans lequel les profils en clavette sont disposés par secteur au moins sur des zones axiales de la goupille (1) et/ou du logement (2).

4. Dispositif selon la revendication 1, dans lequel, après l'engagement de la goupille (1) dans le logement (2), on a une fente (10) entre des profils en clavette opposés de la goupille (1) et du logement (2).

5. Dispositif selon la revendication 1, dans lequel le tracé de la spirale logarithmique est généré par plusieurs cercles osculateurs qui présentent des centres de cercle décalés par rapport à l'axe de la goupille (1) ou à celui du logement (2).

6. Dispositif selon la revendication 1, dans lequel la pente des surfaces de clavetage (6,9) se situe entre 1/5 et 1/500, de préférence entre 1/20 et 1/100.

7. Dispositif selon la revendication 1, dans lequel la goupille (1) présente une partie en saillie radiale telle une tête (12), une douille, un ergot, ou similaire ou des pièces fixées sur elle telles une bague de serrage, un disque de serrage ou des pièces similaires.

8. Dispositif selon la revendication 7, dans lequel la face inférieure, tournée vers le logement (2), de la partie en saillie radiale de la goupille (1) et la zone opposée du logement présentent une ou plusieurs clavettes avec une pente constante.

9. Dispositif selon l'une quelconque des revendications 1 à 8, dans lequel la goupille (1) et le logement (2) se présentent respectivement sous la forme de boulon et d'écrou.

10. Dispositif selon l'une quelconque des revendications 1 à 6, dans lequel la goupille (1) est reliée comme embout (114) avec un écrou fileté (110) et présente une perforation (118) avec un filetage (112) approprié à l'écrou fileté (110).

11. Dispositif selon la revendication 1, dans lequel le logement (2) se présente sous la forme d'une douille (41) qui peut être élargie et/ou fendue de façon élastique ou élasto-plastique.

12. Dispositif selon la revendication 1, dans lequel la goupille (1) et le logement (2) présentent des butées de rotation qui agissent ensemble.

13. Dispositif selon l'une quelconque des revendications 1 à 6, 11 ou 12, dans lequel la goupille (1) et le logement (2) sont conçus respectivement comme une goupille de position (26) et un alésage d'ajustage (27).

14. Dispositif selon l'une quelconque des revendications 1 à 6, 11 ou 12, dans lequel la goupille (1) et le logement (2) sont conçus respectivement comme un noyau de cheville (40) et une douille de cheville (41).

15. Dispositif selon l'une quelconque des revendications 1 à 6, 11 ou 12, dans lequel la goupille (1) et le logement (2) sont disposés respectivement sur une poignée (74) et sur un support de poignée ou inversement.

16. Dispositif selon l'une quelconque des revendications 1 à 6 ou 12, dans lequel la goupille (1) est conçue comme un socle (132) d'une ampoule (130) ou autre pièce semblable émettrice de lumière qui sert de contact électrique et le logement (2) comme un culot (138) pour le raccordement mécanique et électrique de l'ampoule (130).
